# EUROPÄISCHE PATENTSCHRIFT

(11) **EP 4 111 771 B1**
(45) Veröffentlichungstag und Bekanntmachung des Hinweises auf die Patenterteilung: **25.02.2026**
(21) Anmeldenummer: 21708601.6
(22) Anmeldetag: 25.02.2021
(51) Int. Cl.: H04W 72/02, H04W 72/04

(54) **STEIGERUNGSKONZEPT EINER DURCHKOMMENSWAHRSCHEINLICHKEIT**
CONCEPT TO INCREASE A PASS-THROUGH PROBABILITY
CONCEPT POUR AUGMENTER LA PROBABILITÉ DE TRANSFERT

(30) Priorität: 28.02.2020 DE 102020202606
(43) Veröffentlichungstag der Anmeldung: 04.01.2023
(73) Patentinhaber: Fraunhofer-Gesellschaft zur Förderung der angewandten Forschung e.V., 80686 München (DE); Diehl Metering GmbH, 91522 Ansbach (DE)
(72) Erfinder: KAUPPERT, Thomas, 90455 Nürnberg (DE); PETKOV, Hristo, 90425 Nürnberg (DE); MZYK, Raphael, 91126 Kammerstein (DE); GOTTSCHALK, Klaus, 90610 Winkelhaid (DE); OBERNOSTERER, Frank, 90411 Nürnberg (DE); MEYER, Raimund, 90765 Fürth (DE); KILIAN, Gerd, 91058 Erlangen (DE); BERNHARD, Josef, 91058 Erlangen (DE); KNEISSL, Jakob, 91058 Erlangen (DE); WECHSLER, Johannes, 91058 Erlangen (DE); SOLLER, Dominik, 91058 Erlangen (DE); SCHLICHT, Michael, 91058 Erlangen (DE)
(74) Vertreter: Schlenker, Julian
(86) Internationale Anmeldenummer: PCT/EP2021/054625
(87) Internationale Veröffentlichungsnummer: WO 2021/170691

(56) Entgegenhaltungen:
- EP-A1- 1 641 187
- WO-A1-2015/172740
- WO-A2-2017/162742
- DE-A1- 10 164 665
- DE-A1- 102016 220 883

## Beschreibung

Ausführungsbeispiele der vorliegenden Erfindung beziehen sich auf einen Teilnehmer eines Kommunikationssystems. Weitere Ausführungsbeispiele beziehen sich auf eine Basisstation eines Kommunikationssystems. Manche Ausführungsbeispiele beziehen sich auf ein Konzept zur Steigerung einer Durchkommenswahrscheinlichkeit für Teilnehmer mit schlechten Empfangsbedingungen in Kommunikationssystemen mit einer hoher Teilnehmerdichte.

Bei entsprechend hoher Teilnehmerdichte sind drahtlose Kommunikationssysteme interferenzbegrenzt, d.h. die Netzkapazität wird durch Gleichkanalstörungen (Eigenstörungen) limitiert, die dadurch entstehen, dass sich Nutzer gegenseitig stören, die auf der gleichen Frequenz zum gleichen Zeitpunkt senden. Als Maß für die Qualität dient das Nutz-zu-Störleistungs-Verhältnis, CIR (Carrier-to-Interference-Ratio). Je größer das CIR, desto besser die Qualität der Sprach- oder Datenverbindung. Kapazitätssteigernde Maßnahmen, die auf der Verbesserung des Nutz-zu-Störleistungs-Verhältnisses CIR im Netz beruhen, sind vielfältig in der Literatur [7, 9] beschrieben.

CIR-Verbesserungen sind u.a. möglich durch:
- eine Steigerung der empfangenen Nutzleistung C,
- einer Verringerung der Störleistung *I*,
- eine Mittelung von Nutz- und Störleistung, sodass die Wahrscheinlichkeit von sehr großen oder sehr geringen CIR-Werten sinkt.

Der vorliegenden Erfindung liegt somit die Aufgabe zugrunde, ein Konzept zu schaffen, welches die Durchkommenswahrscheinlichkeit für Teilnehmer mit schlechten Empfangsbedingungen in Kommunikationssystemen mit hoher Teilnehmerdichte erhöht.

Die DE 10 2016 220883 A1 beschreibt ein Übertragungsverfahren zur drahtlosen Übertragung von Daten in einem Kommunikationssystem, bei dem Daten unter Verwendung eines Frequenzsprungmusters und/oder Zeitsprungmusters zeitlich synchronisiert zu einem Referenzsignal übertragen werden.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Teilnehmer eines [z.B. unkoordinierten] drahtlosen Kommunikationssystems, wobei das Kommunikationssystem eine Vielzahl von untereinander unkoordinierten Teilnehmern aufweist, wobei das Kommunikationssystem in einem Frequenzband [z.B. ISM Band] kommuniziert, das von einer Vielzahl von untereinander unkoordinierten Kommunikationssystemen zur Kommunikation genutzt wird, wobei der Teilnehmer konfiguriert ist, um Daten zu einer Basisstation des Kommunikationssystems zu senden, wobei der Teilnehmer konfiguriert ist, um, in Abhängigkeit von einem [z.B. geschätzten oder ermittelten] Qualitätskriterium [z.B. Mindest-Empfangspegel, RXLEV, und/oder Bit- oder Blockfehlerraten, RXQUAL] zumindest einer vorangehenden Übertragung zwischen dem Teilnehmer und der Basisstation, die Daten
- in einem ersten Frequenzbereich [z.B. des Frequenzbands] oder in einem zweiten Frequenzbereich [z.B. des Frequenzbands] zu übertragen, wobei der erste Frequenzbereich und der zweite Frequenzbereich unterschiedlich sind, und/oder
- in einem ersten Zeitintervall oder in einem zweiten Zeitintervall zu übertragen, wobei das erste Zeitintervall und das zweite Zeitintervall unterschiedlich sind,

wobei der Teilnehmer konfiguriert, um die Daten in dem ersten Frequenzbereich und/oder in dem ersten Zeitintervall zu übertragen, wenn das Qualitätskriterium in einem ersten Qualitätskriteriums-Bereich liegt oder größer gleich einer Qualitätskriteriums-Schwelle ist, wobei der Teilnehmer konfiguriert ist, um die Daten in dem zweiten Frequenzbereich und/oder in dem zweiten Zeitintervall zu übertragen, wenn das Qualitätskriterium in einem zweiten Qualitätskriteriums-Bereich liegt oder kleiner als die Qualitätskriteriums-Schwelle ist,
wobei das Qualitätskriterium zumindest eines aus
   - einem Mindest-Empfangspegel,
   - einer Bitfehlerrate,
   - einer Blockfehlerrate,
   - einer Paketfehlerrate
   - einem Signal-zu-Rausch Verhältnis,
   - einem Signal-zu-Interferenz Verhältnis,,
wobei die zumindest eine vorangehende Übertragung zwischen dem Teilnehmer und der Basisstation
   - zumindest eine Übertragung einer Bake [engl. beacon] oder eine Übertragung von Daten von der Basisstation zu dem Teilnehmer, wobei der Teilnehmer konfiguriert ist, um das Qualitätskriterium der zumindest einen Übertragung der Bake oder der zumindest einen Übertragung von Daten von der Basisstation zu dem Teilnehmer zu ermitteln oder zu schätzen,
   - oder zumindest eine vorangehende Übertragung von Daten von dem Teilnehmer zu der Basisstation, wobei der Teilnehmer konfiguriert ist, um eine Übertragung von Daten von der Basisstation zu empfangen, wobei die Übertragung von Daten von der Basisstation eine Information über das Qualitätskriterium der zumindest einen vorangehenden Übertragung von Daten von dem Teilnehmer zu der Basisstation aufweist.

Bei Ausführungsbeispielen ist der Teilnehmer konfiguriert, um die Daten für die Übertragung in dem ersten Frequenzbereich und/oder Zeitintervall mit einer ersten Coderate zu versehen, wobei der Teilnehmer konfiguriert ist, um die Daten für die Übertragung in dem zweiten Frequenzbereich und/oder Zeitintervall mit einer zweiten Coderate zu versehen, wobei die erste Coderate größer ist als die zweite Coderate.

Bei Ausführungsbeispielen ist der Teilnehmer konfiguriert, um die Daten in dem ersten Frequenzbereich und/oder ersten Zeitintervall entsprechend eines ersten Sprungmusters [z.B. aus einer ersten Sprungmustergruppe] zu übertragen, wobei der Teilnehmer konfiguriert ist, um die Daten in dem zweiten Frequenzbereich und/oder zweiten Zeitintervall entsprechend eines zweiten Sprungmusters [z.B. aus einer zweiten Sprungmustergruppe] zu übertragen, wobei das erste Sprungmuster und das zweite Sprungmuster unterschiedlich sind.

Bei Ausführungsbeispielen ist das erste Sprungmuster eines aus einer ersten Gruppe von Sprungmustern, die dem ersten Frequenzbereich und/oder Zeitintervall zugewiesen ist, wobei das zweite Sprungmuster eines aus einer zweiten Gruppe von Sprungmustern ist, die dem zweiten Frequenzbereich und/oder Zeitintervall zugewiesen ist, wobei die erste Gruppe von Sprungmustern und die zweite Gruppe von Sprungmustern unterschiedlich sind.

Bei Ausführungsbeispielen ist der Teilnehmer ferner konfiguriert, um, in Abhängigkeit einer geforderten oder sich neu ergebenden Dienstgüte [z.B. (geringe) Blockierrate, (garantierte) Latenzzeit, (garantierte) Reaktionszeit, Reduzierung der Blockierwahrscheinlichkeit, oder Prioritätsänderung, z.B. wegen Alarm oder Notabschaltung] der zu übertragenden Daten, die Daten
- in dem ersten Frequenzbereich [z.B. des Frequenzbands] oder in dem zweiten Frequenzbereich [z.B. des Frequenzbands] zu übertragen, und/oder
- in dem ersten Zeitintervall oder in dem zweiten Zeitintervall zu übertragen.

Weitere Ausführungsbeispiele schaffen eine Basisstation eines [z.B. unkoordinierten] drahtlosen Kommunikationssystems, wobei das Kommunikationssystem eine Vielzahl von untereinander unkoordinierten Teilnehmern aufweist, wobei das Kommunikationssystem in einem Frequenzband [z.B. ISM Band] kommuniziert, das von einer Vielzahl von untereinander unkoordinierten Kommunikationssystemen zur Kommunikation genutzt wird, wobei die Basisstation konfiguriert ist, um Daten von einem Teilnehmer des Kommunikationssystems zu empfangen, wobei die Daten in Abhängigkeit von einem [z.B. geschätzten oder ermittelten] Qualitätskriterium [z.B. Mindest-Empfangspegel, RXLEV, und/oder Bit- oder Blockfehlerraten, RXQUAL,] zumindest einer vorangehenden Übertragung zwischen dem Teilnehmer und der Basisstation
- in einem ersten Frequenzbereich [z.B. des Frequenzbands] oder in einem zweiten Frequenzbereich [z.B. des Frequenzbands] übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind,

wobei die Daten in dem ersten Frequenzbereich und/oder in dem ersten Zeitintervall übertragen werden, wenn das Qualitätskriterium in einem ersten Qualitätskriteriums-Bereich liegt oder größer gleich einer Qualitätskriteriums-Schwelle ist, wobei die Daten in dem zweiten Frequenzbereich und/oder in dem zweiten Zeitintervall übertragen werden, wenn das Qualitätskriterium in einem zweiten Qualitätskriteriums-Bereich liegt oder kleiner als die Qualitätskriteriums-Schwelle,
wobei das Qualitätskriterium zumindest eines aus
   - einem Mindest-Empfangspegel,
   - einer Bitfehlerrate,
   - einer Blockfehlerrate,
   - einer Paketfehlerrate,
   - einem Signal-zu-Rausch Verhältnis,
   - einem Signal-zu-Interferenz Verhältnis,
wobei die zumindest eine vorangehende Übertragung zumindest eine vorangehende Übertragung von Daten von dem Teilnehmer zu der Basisstation umfasst, wobei die Basisstation konfiguriert ist, um das Qualitätskriterium basierend auf der zumindest einen vorangehenden Übertragung von Daten von dem Teilnehmer zu der Basisstation zu ermitteln, wobei die Basisstation konfiguriert ist, um Daten zu dem Teilnehmer zu senden, die eine Information über das Qualitätskriterium der zumindest einen vorangehenden Übertragung von Daten von dem Teilnehmer zu der Basisstation aufweist.

Bei Ausführungsbeispielen sind die in dem ersten Frequenzbereich und/oder ersten Zeitintervall übertragene Daten mit einer ersten Coderate versehen, wobei die in dem zweiten Frequenzbereich und/oder zweiten Zeitintervall übertragene Daten mit einer zweiten Coderate versehen sind, wobei die erste Coderate größer ist als die zweite Coderate.

Bei Ausführungsbeispielen werden die Daten in dem ersten Frequenzbereich und/oder ersten Zeitintervall entsprechend eines ersten Sprungmusters [z.B. aus einer ersten Sprungmustergruppe] übertragen, wobei die Daten in dem zweiten Frequenzbereich und/oder zweiten Zeitintervall entsprechend eines zweiten Sprungmusters [z.B. aus einer zweiten Sprungmustergruppe] übertragen werden, wobei das erste Sprungmuster und das zweite Sprungmuster unterschiedlich sind.

Bei Ausführungsbeispielen ist das erste Sprungmuster eines aus einer ersten Gruppe von Sprungmustern, die dem ersten Frequenzbereich und/oder Zeitintervall zugewiesen ist, wobei das zweite Sprungmuster eines aus einer zweiten Gruppe von Sprungmustern ist, die dem zweiten Frequenzbereich und/oder Zeitintervall zugewiesen ist, wobei die erste Gruppe von Sprungmustern und die zweite Gruppe von Sprungmustern unterschiedlich sind.

Bei Ausführungsbeispielen werden die Daten in Abhängigkeit einer geforderten oder sich neu ergebenden Dienstgüte [z.B. (geringe) Blockierrate, (garantierte) Latenzzeit, (garantierte) Reaktionszeit, Reduzierung der Blockierwahrscheinlichkeit, oder Prioritätsänderung, z.B. wegen Alarm oder Notabschaltung] der zu übertragenden Daten
- in dem ersten Frequenzbereich [z.B. des Frequenzbands] oder in dem zweiten Frequenzbereich [z.B. des Frequenzbands] übertragen, und/oder
- in dem ersten Zeitintervall oder in dem zweiten Zeitintervall übertragen.

Weitere Ausführungsbeispiele schaffen ein Verfahren zum Senden von Daten in einem [z.B. unkoordinierten] drahtlosen Kommunikationssystem, wobei das Kommunikationssystem eine Vielzahl von untereinander unkoordinierten Teilnehmern aufweist, wobei das Kommunikationssystem in einem Frequenzband kommuniziert, das von einer Vielzahl von untereinander unkoordinierten Kommunikationssystemen zur Kommunikation genutzt wird. Das Verfahren umfasst einen Schritt des Sendens von Daten von einem Teilnehmer des Kommunikationssystems zu einer Basisstation des Kommunikationssystems, wobei die Daten in Abhängigkeit von einem [z.B. geschätzten oder ermittelten] Qualitätskriterium [z.B. Mindest-Empfangspegel, RXLEV, und/oder Bit- oder Blockfehlerraten, RXQUAL,] zumindest einer vorangehenden Übertragung zwischen dem Teilnehmer und der Basisstation
- in einem ersten Frequenzbereich [z.B. des Frequenzbands] oder in einem zweiten Frequenzbereich [z.B. des Frequenzbands] übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind,

wobei die Daten in dem ersten Frequenzbereich und/oder in dem ersten Zeitintervall übertragen werden, wenn das Qualitätskriterium in einem ersten Qualitätskriteriums-Bereich liegt oder größer gleich einer Qualitätskriteriums-Schwelle ist, wobei die Daten in dem zweiten Frequenzbereich und/oder in dem zweiten Zeitintervall übertragen werden, wenn das Qualitätskriterium in einem zweiten Qualitätskriteriums-Bereich liegt oder kleiner als die Qualitätskriteriums-Schwelle ist,
wobei das Qualitätskriterium zumindest eines aus
   - einem Mindest-Empfangspegel,
   - einer Bitfehlerrate,
   - einer Blockfehlerrate,
   - einer Paketfehlerrate
   - einem Signal-zu-Rausch Verhältnis,
   - einem Signal-zu-Interferenz Verhältnis,,
wobei die zumindest eine vorangehende Übertragung zwischen dem Teilnehmer und der Basisstation
   - zumindest eine Übertragung einer Bake [engl. beacon] oder eine Übertragung von Daten von der Basisstation zu dem Teilnehmer, wobei der Teilnehmer konfiguriert ist, um das Qualitätskriterium der zumindest einen Übertragung der Bake oder der zumindest einen Übertragung von Daten von der Basisstation zu dem Teilnehmer zu ermitteln oder zu schätzen,
   - oder zumindest eine vorangehende Übertragung von Daten von dem Teilnehmer zu der Basisstation, wobei der Teilnehmer konfiguriert ist, um eine Übertragung von Daten von der Basisstation zu empfangen, wobei die Übertragung von Daten von der Basisstation eine Information über das Qualitätskriterium der zumindest einen vorangehenden Übertragung von Daten von dem Teilnehmer zu der Basisstation aufweist.

Weitere Ausführungsbeispiele schaffen ein Verfahren zum Empfangen von Daten in einem [z.B. unkoordinierten] drahtlosen Kommunikationssystem, wobei das Kommunikationssystem eine Vielzahl von untereinander unkoordinierten Teilnehmern aufweist, wobei das Kommunikationssystem in einem Frequenzband kommuniziert, das von einer Vielzahl von untereinander unkoordinierten Kommunikationssystemen zur Kommunikation genutzt wird.

Das Verfahren umfasst einen Schritt des Empfangens von einem Teilnehmer des Kommunikationssystems zu einer Basisstation des Kommunikationssystems gesendeten Daten, wobei die Daten in Abhängigkeit von einem [z.B. geschätzten oder ermittelten] Qualitätskriterium [z.B. Mindest-Empfangspegel, RXLEV, und/oder Bit- oder Blockfehlerraten, RXQUAL,] zumindest einer vorangehenden Übertragung zwischen dem Teilnehmer und der Basisstation
- in einem ersten Frequenzbereich [z.B. des Frequenzbands] oder in einem zweiten Frequenzbereich [z.B. des Frequenzbands] übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind,

wobei die Daten in dem ersten Frequenzbereich und/oder in dem ersten Zeitintervall übertragen werden, wenn das Qualitätskriterium in einem ersten Qualitätskriteriums-Bereich liegt oder größer gleich einer Qualitätskriteriums-Schwelle ist, wobei die Daten in dem zweiten Frequenzbereich und/oder in dem zweiten Zeitintervall übertragen werden, wenn das Qualitätskriterium in einem zweiten Qualitätskriteriums-Bereich liegt oder kleiner als die Qualitätskriteriums-Schwelle,
wobei das Qualitätskriterium zumindest eines aus
   - einem Mindest-Empfangspegel,
   - einer Bitfehlerrate,
   - einer Blockfehlerrate,
   - einer Paketfehlerrate,
   - einem Signal-zu-Rausch Verhältnis,
   - einem Signal-zu-Interferenz Verhältnis,
wobei die zumindest eine vorangehende Übertragung zumindest eine vorangehende Übertragung von Daten von dem Teilnehmer zu der Basisstation umfasst, wobei die Basisstation konfiguriert ist, um das Qualitätskriterium basierend auf der zumindest einen vorangehenden Übertragung von Daten von dem Teilnehmer zu der Basisstation zu ermitteln, wobei die Basisstation konfiguriert ist, um Daten zu dem Teilnehmer zu senden, die eine Information über das Qualitätskriterium der zumindest einen vorangehenden Übertragung von Daten von dem Teilnehmer zu der Basisstation aufweist.

Weitere Beispiele schaffen einen Teilnehmer eines [z.B. unkoordinierten] drahtlosen Kommunikationssystems, wobei das Kommunikationssystem eine Vielzahl von untereinander unkoordinierten Teilnehmern aufweist, [z.B. wobei das Kommunikationssystem in einem Frequenzband [z.B. ISM Band] kommuniziert, das von einer Vielzahl von untereinander unkoordinierten Kommunikationssystemen zur Kommunikation genutzt wird,] wobei der Teilnehmer konfiguriert ist, um Daten zu einer Basisstation des Kommunikationssystems zu senden, wobei der Teilnehmer konfiguriert ist, um, in Abhängigkeit einer geforderten Dienstgüte [QoS, Quality of Service] [z.B. (geringe) Blockierrate, oder (garantierte) Latenzzeit, oder (garantierte) Reaktionszeit] der zu übertragenden Daten, die Daten
- in einem ersten Frequenzbereich [z.B. des Frequenzbands] oder in einem zweiten Frequenzbereich [z.B. des Frequenzbands] zu übertragen, wobei der erste Frequenzbereich und der zweite Frequenzbereich unterschiedlich sind, und/oder
- in einem ersten Zeitintervall oder in einem zweiten Zeitintervall zu übertragen, wobei das erste Zeitintervall und das zweite Zeitintervall unterschiedlich sind.

Bei Beispielen ist der Teilnehmer konfiguriert, um die Daten in dem ersten Frequenzbereich und/oder in dem ersten Zeitintervall zu übertragen, wenn die geforderte Dienstgüte in einem ersten Dienstgüten-Bereich liegt oder kleiner gleich einer Dienstgüten-Schwelle ist, wobei der Teilnehmer konfiguriert ist, um die Daten in dem zweiten Frequenzbereich und/oder in dem zweiten Zeitintervall zu übertragen, wenn die geforderte Dienstgüte in einem zweiten Dienstgüten-Bereich liegt oder größer als die Dienstgüten-Schwelle ist.

Bei Beispielen ist der Teilnehmer konfiguriert, um, wenn die geforderte Dienstgüte in einem ersten Dienstgüten-Bereich liegt oder kleiner gleich einer Dienstgüten-Schwelle ist, vereinzelte Übertragungen von Daten aus einer Reihe von Übertragungen von Daten in dem zweiten Frequenzbereich und/oder in dem zweiten Zeitintervall zu übertragen.

Bei Beispielen ist die geforderte Dienstgüte zumindest eine aus
- einer geforderten Latenzzeit,
- einer geforderten Reaktionszeit,
- einer geforderten maximalen Blockierrate.

Bei Beispielen ist der Teilnehmer konfiguriert, um die Daten für die Übertragung in dem ersten Frequenzbereich und/oder Zeitintervall mit einer ersten Coderate zu versehen, wobei der Teilnehmer konfiguriert ist, um die Daten für die Übertragung in dem zweiten Frequenzbereich und/oder Zeitintervall mit einer zweiten Coderate zu versehen, wobei die erste Coderate kleiner ist als die zweite Coderate.

Bei Beispielen ist der Teilnehmer konfiguriert, um die Daten in dem ersten Frequenzbereich und/oder ersten Zeitintervall entsprechend eines ersten Sprungmusters [z.B. aus einer ersten Sprungmustergruppe] zu übertragen, wobei der Teilnehmer konfiguriert ist, um die Daten in dem zweiten Frequenzbereich und/oder zweiten Zeitintervall entsprechend eines zweiten Sprungmusters [z.B. aus einer zweiten Sprungmustergruppe] zu übertragen, wobei das erste Sprungmuster und das zweite Sprungmuster unterschiedlich sind.

Bei Beispielen ist das erste Sprungmuster eines aus einer ersten Gruppe von Sprungmustern, die dem ersten Frequenzbereich und/oder Zeitintervall zugewiesen ist, wobei das zweite Sprungmuster eines aus einer zweiten Gruppe von Sprungmustern ist, die dem zweiten Frequenzbereich und/oder Zeitintervall zugewiesen ist, wobei die erste Gruppe von Sprungmustern und die zweite Gruppe von Sprungmustern unterschiedlich sind.

Weitere Beispiele schaffen eine Basisstation eines [z.B. unkoordinierten] drahtlosen Kommunikationssystems, wobei das Kommunikationssystem eine Vielzahl von untereinander unkoordinierten Teilnehmern aufweist, [z.B. wobei das Kommunikationssystem in einem Frequenzband [z.B. ISM Band] kommuniziert, das von einer Vielzahl von untereinander unkoordinierten Kommunikationssystemen zur Kommunikation genutzt wird,] wobei Die Basisstation konfiguriert ist, um Daten von einem Teilnehmer des Kommunikationssystems zu empfangen, wobei die Daten in Abhängigkeit einer geforderten Dienstgüte [QoS, Quality of Service] [z.B. (geringe) Blockierrate, oder (garantierte) Latenzzeit, oder (garantierte) Reaktionszeit] der Daten
- in einem ersten Frequenzbereich [z.B. des Frequenzbands] oder in einem zweiten Frequenzbereich [z.B. des Frequenzbands] übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

Bei Beispielen werden die Daten in dem ersten Frequenzbereich und/oder in dem ersten Zeitintervall übertragen, wenn die geforderte Dienstgüte in einem ersten Dienstgüten-Bereich liegt oder größer gleich einer Dienstgüten-Schwelle ist, wobei die Daten in dem zweiten Frequenzbereich und/oder in dem zweiten Zeitintervall übertragen werden, wenn die geforderte Dienstgüte in einem zweiten Dienstgüten-Bereich liegt oder kleiner als die Dienstgüten-Schwelle ist.

Bei Beispielen ist die geforderte Dienstgüte zumindest eine aus
- einer geforderten Latenzzeit,
- einer geforderten Reaktionszeit,
- einer geforderten maximalen Blockierrate.

Bei Beispielen sind die in dem ersten Frequenzbereich und/oder ersten Zeitintervall übertragenen Daten mit einer ersten Coderate versehen, wobei die in dem zweiten Frequenzbereich und/oder zweiten Zeitintervall übertragenen Daten mit einer zweiten Coderate versehen ist, wobei die erste Coderate größer ist als die zweite Coderate.

Bei Beispielen werden die Daten in dem ersten Frequenzbereich und/oder ersten Zeitintervall entsprechend eines ersten Sprungmusters [z.B. aus einer ersten Sprungmustergruppe] übertragen, wobei die Daten in dem zweiten Frequenzbereich und/oder zweiten Zeitintervall entsprechend eines zweiten Sprungmusters [z.B. aus einer zweiten Sprungmustergruppe] übertragen werden, wobei das erste Sprungmuster und das zweite Sprungmuster unterschiedlich sind.

Bei Beispielen ist das erste Sprungmuster eines aus einer ersten Gruppe von Sprungmustern, die dem ersten Frequenzbereich und/oder Zeitintervall zugewiesen ist, wobei das zweite Sprungmuster eines aus einer zweiten Gruppe von Sprungmustern ist, die dem zweiten Frequenzbereich und/oder Zeitintervall zugewiesen ist, wobei die erste Gruppe von Sprungmustern und die zweite Gruppe von Sprungmustern unterschiedlich sind.

Weitere Beispiele schaffen ein Verfahren zum Senden von Daten in einem [z.B. unkoordinierten] drahtlosen Kommunikationssystem, wobei das Kommunikationssystem eine Vielzahl von untereinander unkoordinierten Teilnehmern aufweist. Das Verfahren umfasst einen Schritt des Sendens von Daten von einem Teilnehmer des Kommunikationssystems zu einer Basisstation des Kommunikationssystems, wobei die Daten in Abhängigkeit einer geforderten Dienstgüte [QoS, Quality of Service] [z.B. (geringe) Blockierrate, oder (garantierte) Latenzzeit, oder (garantierte) Reaktionszeit] der Daten
- in einem ersten Frequenzbereich [z.B. des Frequenzbands] oder in einem zweiten Frequenzbereich [z.B. des Frequenzbands] übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

Weitere Beispiele schaffen ein Verfahren zum Empfangen von Daten in einem [z.B. unkoordinierten] drahtlosen Kommunikationssystem, wobei das Kommunikationssystem eine Vielzahl von untereinander unkoordinierten Teilnehmern aufweist. Das Verfahren umfasst einen Schritt des Empfangens von von einem Teilnehmer des Kommunikationssystems zu einer Basisstation des Kommunikationssystems gesendeten Daten, wobei die Daten in Abhängigkeit einer geforderten Dienstgüte [QoS, Quality of Service] [z.B. (geringe) Blockierrate, oder (garantierte) Latenzzeit, oder (garantierte) Reaktionszeit] der Daten
- in einem ersten Frequenzbereich [z.B. des Frequenzbands] oder in einem zweiten Frequenzbereich [z.B. des Frequenzbands] übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

Weitere Beispiele schaffen einen Teilnehmer eines [z.B. unkoordinierten oder koordinierten] drahtlosen Kommunikationssystems, [z.B. wobei das Kommunikationssystem in einem Frequenzband kommuniziert, das von einer Vielzahl von untereinander unkoordinierten Kommunikationssystemen zur Kommunikation genutzt wird,] wobei der Teilnehmer konfiguriert ist, um Daten entsprechend eines Sprungmuster in der Zeit und/oder Frequenz verteilt zu einer Basisstation des Kommunikationssystems zu senden und/oder von der Basisstation des Kommunikationssystems zu empfangen, wobei das für die Übertragung der Daten verwendete Sprungmuster
- von einer Position des Teilnehmers in Bezug auf die Basisstation, und/oder
- von einem Qualitätskriterium [z.B. RSSI (RSSI = Received Signal Strength Indication, dt. ein Indikator für die Signalstäke), PER (PER = Packet Error Rate, dt. Paketfehlerrate), BER (BER = Bit Error Rate, Bitfehlerhäufigkeit), SIR (SIR = Signal-to-Interference Ratio, dt. Signal-Interferenz-Verhältnis), SNR (SNR = Signal-to-Noise Ratio, dt. Signal-Rausch-Verhältnis)] zumindest einer vorangehenden Übertragung zwischen dem Teilnehmer und der Basisstation, und/oder
- einer Kanallast [z.B. unmittelbar] vor der Übertragung der Daten, und/oder
- von einer geforderten Dienstgüte [z.B. QoS] der übertragenen Daten,
abhängig ist.

Bei Beispielen ist das für die Übertragung der Daten verwendete Sprungmuster von der Position des Teilnehmers in Bezug auf die Basisstation abhängig, wobei der Teilnehmer konfiguriert ist, um die Daten entsprechend eines ersten Sprungmusters [z.B. einer ersten Gruppe von Sprungmustern] zu senden und/oder zu empfangen, wenn die Position des Teilnehmers in einen ersten Bereich eines von der Basisstation abgedeckten geografischen Gebiets fällt, wobei der Teilnehmer konfiguriert ist, um die Daten entsprechend eines zweiten Sprungmusters zu übertragen, wenn die Position des Teilnehmers in einen zweiten Bereich des von der Basisstation abgedeckten geografischen Gebiets fällt, wobei das erste Sprungmuster und das zweite Sprungmuster unterschiedlich sind, wobei der erste Bereich und der zweite Bereich unterschiedlich sind.

Bei Beispielen unterscheiden sich der erste Bereich und der zweite Bereich hinsichtlich
- Entfernungen zu der Basisstation, und/oder
- Qualitätskriterien [z.B. RSSI, PER, BER, SIR, SNR].

Beispielsweise können die Teilnehmer nach Positionen [z.B. wenn die jeweiligen Koordinaten der Teilnehmer z.B. durch Lokalisierung bekannt sind] oder nach RSSI oder nach Qualität in Bereiche eingeteilt werden, wobei sich die Bereiche dadurch unterscheiden, dass diese zwischen näher und weiter entfernten Teilnehmer unterscheiden, oder zwischen Teilnehmern, dessen Signale höhere und niedrigere RSSI (Leistungspegel) aufweisen, oder zwischen Teilnehmern, dessen übertragene Daten besserer und schlechterer Qualität aufweisen, wobei unterschiedliche Bereiche unterschiedliche Sprungmuster zugewiesen sind.

Bei Beispielen ist das erste Sprungmuster eines aus einer ersten Gruppe von Sprungmustern, die dem ersten Bereich zugeordnet ist, wobei das zweite Sprungmuster eines aus einer zweiten Gruppe von Sprungmustern ist, die dem zweiten Bereich zugeordnet ist, wobei die erste Gruppe von Sprungmusters und die zweite Gruppe von Sprungmustern unterschiedlich sind.

Bei Beispielen unterscheidet sich das Sprungmuster zumindest eines Bereichs aus dem ersten Bereich und dem zweiten Bereich von einem Sprungmusters eines Bereichs [z.B. eines zu dem geografischen Gebiet benachbarten geografischen Gebiets], der an den zumindest einen Bereich angrenzt oder diesen zumindest teilweise überlappt und der von einer benachbarten Basisstation des Kommunikationssystems abgedeckt [z.B. bedient] wird.

Bei Beispielen unterscheidet sich das erste Sprungmuster des ersten Bereichs von einem weiteren ersten Sprungmuster eines weiteren ersten Bereichs eines zu dem geografischen Gebiet benachbarten geografischen Gebiets, das von einer benachbarten Basisstation des Kommunikationssystems abgedeckt wird, und/oder wobei sich das zweite Sprungmuster des zweiten Bereichs von einem weiteren zweiten Sprungmuster eines weiteren zweiten Bereichs des zu dem geografischen Gebiet benachbarten geografischen Gebiets, das von der benachbarten Basisstation des Kommunikationssystems abgedeckt wird, unterscheidet.

Beispielsweise kann für eine benachbarte Basisstation eine wiederholte Benutzung der Sprungmuster oder Sprungmustergruppen stattfinden, wobei sich die Zuteilung der Bereiche zu Sprungmuster zu Sprungmustergruppen für die benachbarte Basisstation unterscheidet.

Beispielsweise können die Sprungmuster oder die Sprungmustergruppen für die benachbarten Basisstation genau umgekehrt zugeteilt werden.

Bei Beispielen wird zumindest eines aus dem ersten Sprungmuster des ersten Gebiets und dem zweiten Sprungmuster des zweiten Gebiets für einen weiteren Bereich eines zu dem geografischen Gebiet benachbarten geografischen Gebiets, das von einer benachbarten Basisstation des Kommunikationssystems abgedeckt wird, verwendet.

Beispielsweise können bestimmte Sprungmuster oder Sprungmustergruppen für die benachbarten Basisstationen wiederholt werden und andere nicht wiederholt werden.

Bei Beispielen ist das für die Übertragung der Daten verwendete Sprungmuster von einem Qualitätskriterium zumindest einer vorangehenden Übertragung zwischen dem Teilnehmer und der Basisstation abhängig, wobei die zumindest eine vorangehende Übertragung zwischen dem Teilnehmer und der Basisstation zumindest eine Übertragung [z.B. Link-Übertragung, Baken-Übertragung oder Downlink-Datenübertragung] von der Basisstation zu dem Teilnehmer umfasst, wobei der Teilnehmer konfiguriert ist, um die Qualität der zumindest einen Übertragung der Basisstation zu ermitteln oder zu schätzen.

Bei Beispielen ist das für die Übertragung der Daten verwendete Sprungmuster von einem Qualitätskriterium zumindest einer vorangehenden Übertragung zwischen dem Teilnehmer und der Basisstation abhängig, wobei die zumindest eine vorangehende Übertragung zumindest eine vorangehende Übertragung von Daten von dem Teilnehmer zu der Basisstation ist, wobei der Teilnehmer konfiguriert ist, um eine Übertragung von Daten von der Basisstation zu empfangen, wobei die Übertragung von Daten von der Basisstation eine Information über das Qualitätskriterium der zumindest einen vorangehenden Übertragung von Daten des Teilnehmers aufweist.

Bei Beispielen ist der Teilnehmer konfiguriert, um die Daten entsprechend eines ersten Sprungmusters zu senden und/oder zu empfangen, wenn das Qualitätskriterium in einem ersten Qualitätskriteriumsbereich liegt, wobei der Teilnehmer konfiguriert ist, um die Daten entsprechend eines zweiten Sprungmusters zu senden und/oder zu empfangen, wenn das Qualitätskriterium in einem zweiten Qualitätskriteriumsbereich liegt, wobei das erste Sprungmuster und das zweite Sprungmuster unterschiedlich sind, wobei der erste Qualitätskriteriumsbereich und der zweite Qualitätskriteriumsbereich unterschiedlich sind.

Bei Beispielen ist das erste Sprungmuster eines aus einer ersten Gruppe von Sprungmustern, die dem ersten Qualitätskriteriumsbereich zugeordnet ist, wobei das zweite Sprungmuster eines aus einer zweiten Gruppe von Sprungmustern ist, die dem zweiten Qualitätskriteriumsbereich zugeordnet ist, wobei die erste Gruppe von Sprungmusters und die zweite Gruppe von Sprungmustern unterschiedlich sind.

Bei Beispielen ist das Qualitätskriterium zumindest eines aus
- einem Mindest-Empfangspegel,
- einer Bitfehlerrate,
- einer Blockfehlerrate,
- einer Paketfehlerrate,
- einem Signal-zu-Rausch Verhältnis,
- einem Signal-zu-Interferenz Verhältnis,
- einem Verhältnis zwischen detektierten Übertragungen von Daten und nicht detektierten Übertragungen von Daten des Teilnehmers.

Bei Beispielen ist das für die Übertragung der Daten verwendete Sprungmuster von einer geforderten Dienstgüte der Daten abhängig, wobei der Teilnehmer konfiguriert ist, um die Daten entsprechend eines ersten Sprungmusters zu senden und/oder zu empfangen, wenn die geforderte Dienstgüte in einem ersten Dienstgütenbereich liegt, wobei der Teilnehmer konfiguriert ist, um die Daten entsprechend eines zweiten Sprungmusters zu senden und/oder zu empfangen, wenn die geforderte Dienstgüte in einem zweiten Dienstgütenbereich liegt, wobei das erste Sprungmuster und das zweite Sprungmuster unterschiedlich sind, wobei der erste Dienstgütenbereich und der zweite Dienstgütenbereich unterschiedlich sind.

Bei Beispielen ist das erste Sprungmuster eines aus einer ersten Gruppe von Sprungmustern, die dem ersten Dienstgütenbereich zugeordnet ist, wobei das zweite Sprungmuster eines aus einer zweiten Gruppe von Sprungmustern ist, die dem zweiten Dienstgütenbereich zugeordnet ist, wobei die erste Gruppe von Sprungmusters und die zweite Gruppe von Sprungmustern unterschiedlich sind.

Bei Beispielen ist die geforderte Dienstgüte zumindest eine aus
- einer geforderten Latenzzeit,
- einer geforderten Reaktionszeit,
- einer geforderten maximalen Blockierrate.

Weitere Beispiele schaffen eine Basisstation eines [z.B. unkoordinierten oder koordinierten] drahtlosen Kommunikationssystems, [z.B. wobei das Kommunikationssystem in einem Frequenzband kommuniziert, das von einer Vielzahl von untereinander unkoordinierten Kommunikationssystemen zur Kommunikation genutzt wird,] wobei die Basisstation konfiguriert ist, um Daten entsprechend eines Sprungmuster in der Zeit und/oder Frequenz verteilt zu einem Teilnehmer des Kommunikationssystems zu senden und/oder von dem Teilnehmer des Kommunikationssystems zu empfangen, wobei das für die Übertragung der Daten verwendete Sprungmuster von
- einer Position des Teilnehmers in Bezug auf die Basisstation, und/oder
- einem Qualitätskriterium [z.B. RSSI (RSSI = Received Signal Strength Indication, dt. ein Indikator für die Signalstäke), PER (PER = Packet Error Rate, dt. Paketfehlerrate), BER (BER = Bit Error Rate, Bitfehlerhäufigkeit), SIR (SIR = Signal-to-Interference Ratio, dt. Signal-Interferenz-Verhältnis), SNR (SNR = Signal-to-Noise Ratio, dt. Signal-Rausch-Verhältnis)] zumindest einer vorangehenden Übertragung zwischen dem Teilnehmer und der Basisstation, und/oder
- einer Kanallast [z.B. unmittelbar] vor der Übertragung der Daten, und/oder
- einer geforderten Dienstgüte [z.B. QoS] der übertragenen Daten,
abhängig ist.

Bei Beispielen ist das für die Übertragung der Daten verwendete Sprungmuster von der Position des Teilnehmers in Bezug auf die Basisstation abhängig, wobei die Daten entsprechend eines ersten Sprungmusters [z.B. einer ersten Gruppe von Sprungmustern] übertragen werden, wenn die Position des Teilnehmers in einen ersten Bereich eines von der Basisstation abgedeckten geografischen Gebiets fällt, wobei die Daten entsprechend eines zweiten Sprungmusters übertragen werden, wenn die Position des Teilnehmers in einen zweiten Bereich des von der Basisstation abgedeckten geografischen Gebiets fällt, wobei das erste Sprungmuster und das zweite Sprungmuster unterschiedlich sind, wobei der erste Bereich und der zweite Bereich unterschiedlich sind.

Bei Beispielen unterscheiden sich der erste Bereich und der zweite Bereich hinsichtlich
- Entfernungen zu der Basisstation, und/oder
- Qualitätskriterien [z.B. RSSI, PER, BER, SIR, SNR].

Beispielsweise können die Teilnehmer nach Positionen [z.B. wenn die jeweiligen Koordinaten der Teilnehmer z.B. durch Lokalisierung bekannt sind] oder nach RSSI oder nach Qualität in Bereiche eingeteilt werden, wobei sich die Bereiche dadurch unterscheiden, dass diese zwischen näher und weiter entfernten Teilnehmer unterscheiden, oder zwischen Teilnehmern, dessen Signale höhere und niedrigere RSSI (Leistungspegel) aufweisen, oder zwischen Teilnehmern, dessen übertragene Daten besserer und schlechterer Qualität aufweisen, wobei unterschiedliche Bereiche unterschiedliche Sprungmuster zugewiesen sind.

Bei Beispielen ist das erste Sprungmuster eines aus einer ersten Gruppe von Sprungmustern, die dem ersten Bereich zugeordnet ist, wobei das zweite Sprungmuster eines aus einer zweiten Gruppe von Sprungmustern ist, die dem zweiten Bereich zugeordnet ist, wobei die erste Gruppe von Sprungmusters und die zweite Gruppe von Sprungmustern unterschiedlich sind.

Bei Beispielen unterscheidet sich das Sprungmuster zumindest eines Bereichs aus dem ersten Bereich und dem zweiten Bereich von einem Sprungmusters eines Bereichs [z.B. eines zu dem geografischen Gebiet benachbarten geografischen Gebiets], der an den zumindest einen Bereich angrenzt oder diesen zumindest teilweise überlappt und der von einer benachbarten Basisstation des Kommunikationssystems abgedeckt [z.B. bedient] wird.

Bei Beispielen unterscheidet sich das erste Sprungmuster des ersten Bereichs von einem weiteren ersten Sprungmuster eines weiteren ersten Bereichs eines zu dem geografischen Gebiet benachbarten geografischen Gebiets, das von einer benachbarten Basisstation des Kommunikationssystems abgedeckt wird, und/oder wobei sich das zweite Sprungmuster des zweiten Bereichs von einem weiteren zweiten Sprungmuster eines weiteren zweiten Bereichs des zu dem geografischen Gebiet benachbarten geografischen Gebiets, das von der benachbarten Basisstation des Kommunikationssystems abgedeckt wird, unterscheidet.

Beispielsweise kann für eine benachbarte Basisstation eine wiederholte Benutzung der Sprungmuster oder Sprungmustergruppen stattfinden, wobei sich die Zuteilung der Bereiche zu Sprungmuster zu Sprungmustergruppen für die benachbarte Basisstation unterscheidet.

Beispielsweise können die Sprungmuster oder die Sprungmustergruppen für die benachbarten Basisstation genau umgekehrt zugeteilt werden.

Bei Beispielen wird zumindest eines aus dem ersten Sprungmuster des ersten Gebiets und dem zweiten Sprungmuster des zweiten Gebiets für einen weiteren Bereich eines zu dem geografischen Gebiet benachbarten geografischen Gebiets, das von einer benachbarten Basisstation des Kommunikationssystems abgedeckt wird, verwendet.

Beispielsweise können bestimmte Sprungmuster oder Sprungmustergruppen für die benachbarten Basisstationen wiederholt werden und andere nicht wiederholt werden.

Bei Beispielen ist das für die Übertragung der Daten verwendete Sprungmuster von einem Qualitätskriterium zumindest einer vorangehenden Übertragung zwischen dem Teilnehmer und der Basisstation abhängig, wobei die zumindest eine vorangehende Übertragung zwischen dem Teilnehmer und der Basisstation zumindest eine Übertragung [z.B. Link-Übertragung, Baken-Übertragung oder Downlink-Datenübertragung] von der Basisstation zu dem Teilnehmer umfasst, wobei der Teilnehmer konfiguriert ist, um die Qualität der zumindest einen Baken-Übertragung der Basisstation zu ermitteln oder zu schätzen.

Bei Beispielen ist das für die Übertragung der Daten verwendete Sprungmuster von einem Qualitätskriterium zumindest einer vorangehenden Übertragung zwischen dem Teilnehmer und der Basisstation abhängig, wobei die zumindest eine vorangehende Übertragung zumindest eine vorangehende Übertragung von Daten des Teilnehmers ist, wobei der Teilnehmer konfiguriert ist, um eine Übertragung von Daten der Basisstation zu empfangen, wobei die Übertragung von Daten der Basisstation eine Information über das Qualitätskriterium der zumindest einen vorangehenden Übertragung von Daten des Teilnehmers aufweist.

Bei Beispielen ist der Teilnehmer konfiguriert, um die Daten entsprechend eines ersten Sprungmusters zu senden und/oder zu empfangen, wenn das Qualitätskriterium in einem ersten Qualitätskriteriumsbereich liegt, wobei der Teilnehmer konfiguriert ist, um die Daten entsprechend eines zweiten Sprungmusters zu senden und/oder zu empfangen, wenn das Qualitätskriterium in einem zweiten Qualitätskriteriumsbereich liegt, wobei das erste Sprungmuster und das zweite Sprungmuster unterschiedlich sind, wobei der erste Qualitätskriteriumsbereich und der zweite Qualitätskriteriumsbereich unterschiedlich sind.

Bei Beispielen ist das erste Sprungmuster eines aus einer ersten Gruppe von Sprungmustern, die dem ersten Qualitätskriteriumsbereich zugeordnet ist, wobei das zweite Sprungmuster eines aus einer zweiten Gruppe von Sprungmustern ist, die dem zweiten Qualitätskriteriumsbereich zugeordnet ist, wobei die erste Gruppe von Sprungmusters und die zweite Gruppe von Sprungmustern unterschiedlich sind.

Bei Beispielen ist das Qualitätskriterium zumindest eines ist
- einem Mindest-Empfangspegel,
- einer Bitfehlerrate,
- einer Blockfehlerrate,
- einer Paketfehlerrate,
- einem Signal-zu-Rausch Verhältnis,
- einem Signal-zu-Interferenz Verhältnis,
- einem Verhältnis zwischen detektierten Übertragungen von Daten und nicht detektierten Übertragungen von Daten des Teilnehmers.

Bei Beispielen ist das für die Übertragung der Daten verwendete Sprungmuster von einer geforderten Dienstgüte der Daten abhängig, wobei der Teilnehmer konfiguriert ist, um die Daten entsprechend eines ersten Sprungmusters zu senden und/oder zu empfangen, wenn die geforderte Dienstgüte in einem ersten Dienstgütenbereich liegt, wobei der Teilnehmer konfiguriert ist, um die Daten entsprechend eines zweiten Sprungmusters zu senden und/oder zu empfangen, wenn die geforderte Dienstgüte in einem zweiten Dienstgütenbereich liegt, wobei das erste Sprungmuster und das zweite Sprungmuster unterschiedlich sind, wobei der erste Dienstgütenbereich und der zweite Dienstgütenbereich unterschiedlich sind.

Bei Beispielen ist das erste Sprungmuster eines aus einer ersten Gruppe von Sprungmustern, die dem ersten Dienstgütenbereich zugeordnet ist, wobei das zweite Sprungmuster eines aus einer zweiten Gruppe von Sprungmustern ist, die dem zweiten Dienstgütenbereich zugeordnet ist, wobei die erste Gruppe von Sprungmusters und die zweite Gruppe von Sprungmustern unterschiedlich sind.

Bei Beispielen ist die geforderte Dienstgüte zumindest eine aus
- einer geforderten Latenzzeit,
- einer geforderten Reaktionszeit,
- einer geforderten maximalen Blockierrate.

Weitere Beispiele schaffen ein Verfahren zum Übertragen von Daten in einem [z.B. unkoordinierten oder koordinierten] drahtlosen Kommunikationssystem. Das Verfahren umfasst einen Schritt des Übertragens von Daten entsprechend eines Sprungmuster in der Zeit und/oder Frequenz verteilt von einem Teilnehmer des Kommunikationssystems zu einer Basisstation des Kommunikationssystems und/oder von einer Basisstation des Kommunikationssystems zu einem Teilnehmer des Kommunikationssystems, wobei das für die Übertragung der Daten verwendete Sprungmuster von
- einer Position des Teilnehmers in Bezug auf die Basisstation, und/oder
- einem Qualitätskriterium [z.B. RSSI, PER, BER, SIR, SNR] zumindest einer vorangehenden Übertragung zwischen dem Teilnehmer und der Basisstation, und/oder
- einer Kanallast [z.B. unmittelbar] vor der Übertragung der Daten, und/oder
- einer geforderten Dienstgüte [z.B. QoS] der übertragenen Daten,
abhängig ist.

Weitere Ausführungsbeispiele schaffen ein Computerprogramm zur Durchführung eines der hierin beschriebenen Verfahren, wenn das Verfahren auf einem Computer, Mikroprozessor oder SDR-Empfänger (SDR = software definiert radio, dt. Ein Sender und/oder Empfänger, bei dem kleinere oder größere Anteile der Signalverarbeitung mit Software verwirklicht werden) abläuft.

Ausführungsbeispiele nutzen einen eigenen Frequenzbereich und/oder ein eigenes Zeitintervall für Teilnehmer (z.B. Sensorknoten) mit permanent schlechten Empfangsbedingungen.

Ausführungsbeispiele der vorliegenden Erfindung werden bezugnehmend auf die beiliegenden Figuren näher beschrieben. Es zeigen:
- Fig. 1: ein schematisches Blockschaltbild einer Kommunikationsanordnung mit einem ersten Kommunikationssystem, gemäß einem Ausführungsbeispiel der vorliegenden Erfindung,
- Fig. 2a: in einem Diagramm eine Verteilung von Intra- und Interzellinterferenz bei einer Cluster-Größe von K=7,
- Fig. 2b: in einem Diagramm eine Verteilung von Intra- und Interzellinterferenz bei einer Cluster-Größe von K=1,
- Fig. 3: in einem Diagramm eine Verteilungsfunktion des außen zu innen Pfadverlustes entsprechend des sog. "Building Penetration Loss"-Kanalmodells nach dem COST 231 NLOS Modell,
- Fig. 4: in einem Diagramm die Paketfehlerrate aufgetragen über die nach ihren Empfangspegeln sortierten Teilnehmer (z.B. Sensorknoten) einer Funkzelle,
- Fig. 5: in einem Diagramm die Paketfehlerraten aufgetragen über die nach ihrem Empfangspegel sortierten Sensorknoten und Verwendung von adaptiver Kanalcodierung mit den Raten 1/2 und 1/3,
- Fig. 6: ein schematisches Blockschaltbild eines Kommunikationssystems mit einer Basisstation und einem Teilnehmer, gemäß einem Ausführungsbeispiel der vorliegenden Erfindung,
- Fig. 7: in einem Diagramm eine Belegung des Übertragungskanals bei der Übertragung von einer Mehrzahl von Teil-Datenpaketen entsprechend eines Sprungmuster (Zeit- und Frequenzsprungmusters),
- Fig. 8: in einem Diagramm eine Verteilung von Intrazellinterferenz und Interzellinterferenz für diejenigen Teilnehmer, die bedingt dadurch, dass deren Empfangsleistung beispielhaft als Qualitätskriterium unterhalb einer Empfangsleistungsschwelle liegt, Daten im eigenem (unteren) Frequenzbereich übertragen, für eine Clustergröße von K=1,
- Fig. 9: in einem Diagramm Paketfehlerraten für unterschiedliche Faltungscodes mit den Raten 1/2 und 1/3 über die nach ihren Empfangspegeln beispielhaft als Qualitätskriterium sortierten Teilnehmern bei Verwendung von zwei getrennten Frequenzbereichen,
- Fig. 10: zeigt in eine tabellarische Darstellung eines exemplarisches Zuordnungsschema der Basisstation bzgl. Coderate- und Frequenzbereichzuordnung, gemäß einem Ausführungsbeispiel der vorliegenden Erfindung,
- Fig. 11: zeigt eine schematische Darstellung eines Frame-Aufbaus bei TSMA mit Unterträgern innerhalb eines Frequenzbereichs,
- Fig. 12: ein schematisches Blockschaltbild eines Kommunikationssystems mit einer Basisstation und einem Teilnehmer, gemäß einem weiteren Ausführungsbeispiel der vorliegenden Erfindung,
- Fig. 13: ein schematisches Blockschaltbild eines Kommunikationssystems mit einer Basisstation und einem Teilnehmer, gemäß einem weiteren Ausführungsbeispiel der vorliegenden Erfindung,
- Fig. 14: eine schematische Ansicht einer Basisstation sowie einer Zuordnung von vier unterschiedlichen Sprungmustern zu vier unterschiedlichen geometrischen Bereichen, die von der Basisstation bedient werden, gemäß einem Ausführungsbeispiel der vorliegenden Erfindung,
- Fig. 15: eine schematische Ansicht von neuen Basisstationen sowie einer Zuordnung von vier unterschiedlichen Sprungmustern zu jeweils vier unterschiedlichen geometrischen Bereichen, die von jeweils einer der neuen Basisstationen bedient werden, gemäß einem Ausführungsbeispiel der vorliegenden Erfindung,
- Fig. 16: eine schematische Ansicht von zwei Basisstationen sowie einer Zuordnung von unterschiedlichen Sprungmustern zu jeweils unterschiedlichen geometrischen Bereichen, die von den zwei Basisstationen bedient werden, gemäß einem Ausführungsbeispiel der vorliegenden Erfindung,
- Fig. 17: ein Flussdiagramm eines Verfahrens zum Senden von Daten in einem drahtlosen Kommunikationssystem, gemäß einem Ausführungsbeispiel der vorliegenden Erfindung,
- Fig. 18: ein Flussdiagramm eines Verfahrens zum Empfangen von Daten in einem drahtlosen Kommunikationssystem, gemäß einem Ausführungsbeispiel der vorliegenden Erfindung,
- Fig. 19: ein Flussdiagramm eines Verfahrens zum Senden von Daten in einem drahtlosen Kommunikationssystem, gemäß einem Ausführungsbeispiel der vorliegenden Erfindung,
- Fig. 20: ein Flussdiagramm eines Verfahrens zum Empfangen von Daten in einem drahtlosen Kommunikationssystem, gemäß einem Ausführungsbeispiel der vorliegenden Erfindung, und
- Fig. 21: ein Flussdiagramm eines Verfahrens zum Übertragen von Daten in einem drahtlosen Kommunikationssystem, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

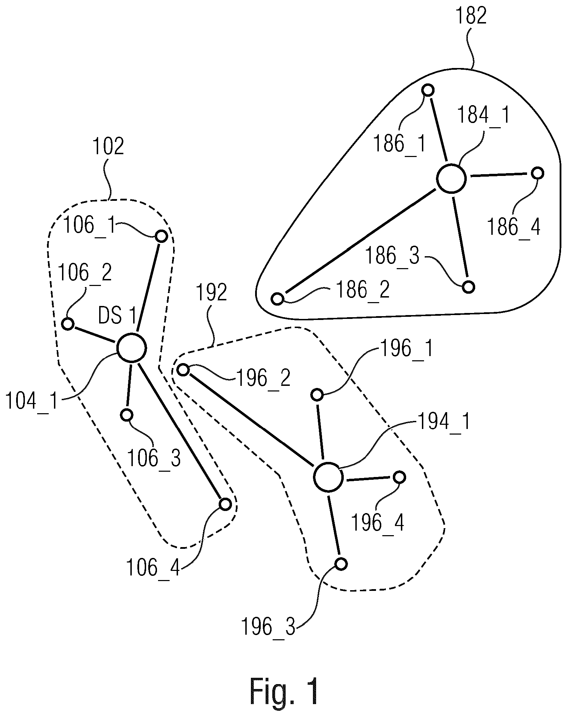

Fig. 1 zeigt ein schematisches Blockschaltbild eines Kommunikationssystems 102 mit einer Vielzahl von untereinander unkoordinierten Teilnehmern 106_1-106_n, gemäß einem Ausführungsbeispiel der vorliegenden Erfindung. Das Kommunikationssystem 102 kann eine Basisstation 104_1 und eine Vielzahl von Teilnehmern 106_1-106_n aufweisen. In dem in Fig. 1 gezeigten Ausführungsbeispiel weist das Kommunikationssystem 102 zur Veranschaulichung vier Teilnehmer 106_1-106_4 auf, das Kommunikationssystem 104_1 kann jedoch genauso 10, 100, 1.000, 10.000 oder sogar 100.000 Teilnehmer oder mehr aufweisen.

Das Kommunikationssystem 102 kann hierbei konfiguriert sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. In Reichweite des Kommunikationssystems 102 können - wie dies in Fig. 1 angedeutet ist - beispielsweise ein oder zwei weitere Kommunikationssysteme 182 und 192 sein mit jeweiligen Teilnehmern (z.B. 186_1-186_4 und 196_1-196_4) und Basisstationen (z.B. 184_1 und 194_1), wobei die Kommunikationssysteme 102, 182 und 192 das gleiche Frequenzband zur drahtlosen Kommunikation nutzen und untereinander unkoordiniert sind.

Bedingt durch die hohe Anzahl an Teilnehmern (Teilnehmerdichte) des Kommunikationssystems 102, kann es zu Interferenzen zwischen Übertragungen verschiedener Teilnehmer innerhalb des eigenen Kommunikationssystems 102 kommen, z.B. wenn diese zufällig zeitgleich oder zumindest zeitlich überlappend Übertragungen auf der gleichen Frequenz durchführen. Ferner kann es zu Interferenzen zwischen Übertragungen von Teilnehmern unterschiedlicher Kommunikationssysteme kommen, z.B. wenn diese zufällig zeitgleich oder zumindest zeitlich überlappend Übertragungen auf der gleichen Frequenz durchführen.

Mit anderen Worten, bei entsprechend hoher Teilnehmerdichte sind terrestrische, drahtlose Kommunikationssysteme (z.B. Mobilfunknetze) interferenzbegrenzt, d.h. die Netzkapazität wird durch Gleichkanalstörungen limitiert, die dadurch entstehen, dass sich Nutzer (z.B. Teilnehmer) gegenseitig stören, die auf der gleichen Frequenz zum gleichen Zeitpunkt senden.

Dabei lassen sich zwei Arten von Interferenzquellen unterscheiden:
- Intrazellinterferenz *I_{Intra}* entsteht in der gleichen Zelle aufgrund von nicht vorhandener Orthogonalität der Nutzer untereinander. Ursachen können beispielsweise nichtideale Eigenschaften von Spreiz- und Scramblingcodes sein (wie bei CDMA) oder Asynchronitäten im Uplink beim Senden im Zeit- und/oder im Frequenzbereich.
- Interzellinterferenz *I_{Inter}* wird durch Teilnehmer von benachbarten Zellen hervorgerufen, die ebenfalls auf der gleichen Frequenz senden.

Sowohl Intra- als auch Interzellinterferenz führen zu einer Minderung der Übertragungsqualität und damit zu einer Reduzierung der Zellkapazität. Als Maß für die Qualität dient das Nutz-zu-Störleistungs-Verhältnis *CIR.* Je größer das *CIR,* desto besser die Verbindungsqualität. Grundlage einer jeden Funknetz- bzw. Funkversorgungsplanung ist das Verhältnis *CIRₘᵢₙ,* das mindestens erforderlich sein muss, um eine geforderte Paketfehlerrate sicherzustellen. Um den störenden Einfluss der Interferenzleistung zu reduzieren, gibt es eine Reihe von Maßnahmen [7, 9], die im Folgenden kurz erläutert werden.

Erstens, eine Steigerung der an der Basisstation empfangenen Nutzleistung C:
- Antennendiversität: Empfangen und/oder Senden über zwei oder mehr Basisstation-Antennen am gleichen Standort mit nachfolgender Kombination der Empfangssignale.
- Makrodiversität/Soft-Handover: Versorgung einer Mobilstation von mehreren Basisstation-Standorten mit Kombination der jeweiligen Signale.
- Leistungsgesteuerte Zellzuordnung: Zuweisung des Teilnehmers an die Zelle mit dem besten Empfangspegel.

Zweitens, eine Verringerung der Störleistung:
- Discontinuous Transmission (DTX) (dt. diskontinuierliche Übertragung): Abschalten des Senders bei Pausen.
- Power Control (dt. Leistungssteuerung): Verringerung der Sendeleistung bei guten Empfangsbedingungen.
- Sektorisierung von Zellen: Versorgung mehrerer Zellen von einem Standort mittels Sektorantennen mit Öffnungswinkeln von z.B. 65° bis 120° anstelle einer omnidirektional wirkenden Antenne.
- Höherwertige Modulationsverfahren oder adaptive Kanalcodierung: Anpassung der Störresistenz an den Empfangspegel; bei besserem Empfangspegel höhere Modulationseffizienz und niedrigerer Codierschutz.
- Erhöhung der Clustergröße (engl. frequency reuse): Erhöhung des Frequenzwiederholabstand *D* als kleinster geometrischer Abstand zwischen den Mittelpunkten zweier Zellen, in denen dieselben Trägerfrequenzen verwendet werden.
- Hierarchische Zellstrukturen: Funknetzstruktur mit Makrozellen (weiträumige Versorgung) und Mikrozellen (für Gebiet mit hoher Verkehrslast). Die Makro- bzw. die Mikrozellen haben dabei unterschiedliche Basisstation-Standorte.

Drittens, eine Mittelung der Störleistung / des *CIR:*
- Frequency Hopping (dt. Frequenzsprungverfahren): Wechsel der Frequenz von Datenblock zu Datenblock.
- Underlay-Overlay Zellstruktur: Unterteilung der Zelle in ringförmige Gebiete mit unterschiedlichen Frequenzwiederholabständen.

Die oben aufgeführten interferenzreduzierenden und damit kapazitätssteigernden Maßnahmen sind jedoch mit erheblichen Mehrkosten verbunden, ein Umstand den es gerade bei einem kosteneffizienten IOT-System besonders genau abzuwägen gilt.

Im Folgenden wird ein digitales Kommunikationssystem (Funkübertragungssystem) betrachtet, in welchem die Teilnehmer (z.B. Sensorknoten oder Aktorknoten) Datenpakete aussenden, wobei der empfangenden Basisstation vorab nicht bekannt ist, welcher Teilnehmer zu welchem Zeitpunkt und auf welcher Funkfrequenz jeweils aktiv ist. In einem derartigen Kommunikationssystem mit Wettbewerbsverfahren (engl. "contention-based random access scheme"), in welchen das Senden von Daten eigeninitiativ durch den Sender und ohne vorherige Bewilligung ( engl. "grant") bzw. Zuweisung von dedizierten Funkressourcen (engl. "scheduling") durch eine koordinierende Instanz (z.B. Basisstation) erfolgt, existiert aufgrund der nicht vorhandenen Nutzer-Orthogonalität immer Intrazellinterferenz *I_{Intra}.* In Abhängigkeit von der bei der Frequenzplanung zugrunde gelegten Cluster-Größe Ktritt noch zusätzlich Interzellinterferenz *I_{Inter}* auf*.* Je kleiner K, desto mehr steigt die Netzkapazität, jedoch wächst die Interzellinterferenz auch entsprechend an.

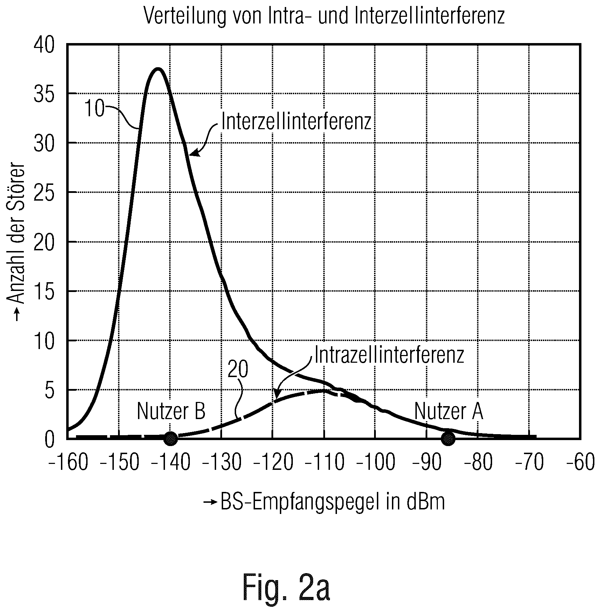

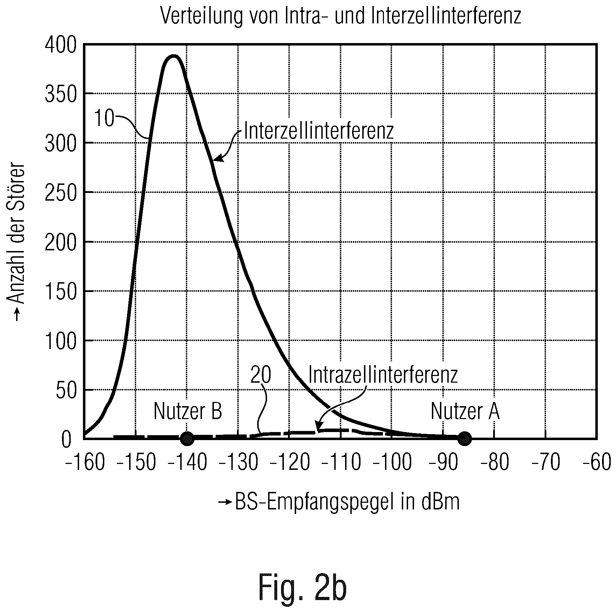

Dies sei in den Fig. 2a und 2b exemplarisch dargestellt. Im Detail zeigen die Fig. 2a und 2b Verteilungen von Interzellinterferenz 10 und Intrazellinterferenz 20 und bei einer Cluster-Größe von K=7 im Falle der Fig. 2a und einer Cluster-Größe von K=1 im Falle der Fig. 2b. Dabei beschreiben die Ordinaten die jeweilige Anzahl an Störern, während die Abszissen den jeweiligen Empfangspegel an der Basisstation in dBm beschreiben.

Mit anderen Worten, Fig. 2a und 2b zeigen die Verteilungsfunktionen der verschiedenen Empfangspegel von Intrazellinterferenz 20 und Interzellinterferenz 10. In Fig. 2a ist die Cluster-Größe *K*=*7*, das heißt, dass nur jede *7*. Funkzelle zur Interzellinterferenz 10 beiträgt. Entsprechend gering fallen die Gleichkanalstörer (Kurve 10 in Fig. 2a) aus den benachbarten Zellen aus, im Vergleich zu den störenden Usern in der eigenen Zelle (Kurve 20 in Fig. 2a). In Fig. 2b, wo die Cluster-Größe *K* gleich *1* ist (alle Funkzellen verwenden die gleiche Frequenz), stellt sich ein anderes Verhältnis von Intrazellinterferenz 20 zu Interzellinterferenz 10 ein. Durch die kleinere Cluster-Größe von *K=1* sind effektiv weniger störende Nutzer in der eigenen Zelle vorhanden, dafür aber mehr Gleichkanalstörer in den benachbarten Zellen. Welche Cluster-Konfiguration den höheren Datendurchsatz liefert, kann nicht so einfach beurteilt werden, da dies von vielen Faktoren, wie beispielsweise der Funkausbreitung, der Funkübertragung und der Signalverarbeitung im Empfänger abhängt.

In den Fig. 2a und 2b sind besonders die Nutzer-Verteilungen in der eigenen Nutzer-Zelle von Bedeutung, also die Kurven 20. Aufgrund der unterschiedlichen räumlichen Entfernung der einzelnen Teilnehmer (z.B. Sensoren) zur empfangenden Basisstation ist der sogenannte "Near-Far-Effekt" (dt. Weit-Nah-Effekt) zu beobachten. Ein Nutzer (z.B. Sensorknoten) (Nutzer A), der sich sehr nahe an der BS befindet, wird in der Regel einen niedrigen Pfadverlust aufweisen und sein Empfangspegel *C_{A}* an der BS wird entsprechend hoch ausfallen (Fig. 2a und 2b beispielsweise im Bereich von -90 *dBm* bis -60 *dBm*). Ein weiter entfernter Nutzer (z.B. Sensorknoten) (Nutzer B) zeigt dagegen einen größeren Pfadverlust und entsprechend niedrig wird sein Empfangspegel *C_{B}* an der Basisstation ausfallen (Fig. 2a und 2b beispielsweise im Bereich von -150 *dBm* bis -120 *dBm*).

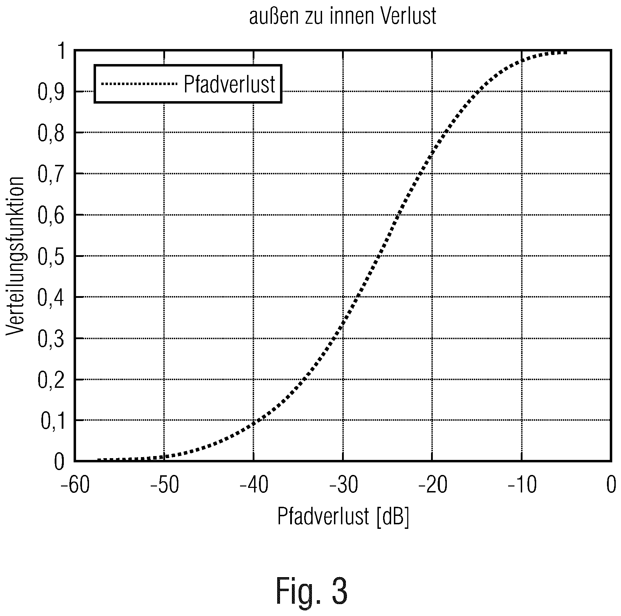

Besonders hoch sind die Pfadverluste bei dem in 3GPP verwendeten sog. "Building Penetration Loss"-Kanalmodell [1,10] nach dem COST 231 NLOS (NLOS = Non-Line-of-Sight, dt. Nicht-Sichtverbindung) outdoor-to-indoor (dt. außen zu innen) Ausbreitungsmodell [11]. Bei diesem Kanalmodell wird der Übergang vom Gebäudeinneren ins Freie modelliert und es können entfernungsunabhängige Pfadverluste von über 50 dB auftreten. Fig. 3 zeigt die Verteilungsfunktion (CDF, cumulative distribution function) des außen zu innen Pfadverlustes entsprechend des sog. "Building Penetration Loss"-Kanalmodells nach dem COST 231 NLOS Modell. Dabei beschreibt die Ordinate die Verteilungsfunktion (CDF, cumulative distribution function) und die Abszisse die Pfadverluste in dB.

Es liegt damit auf der Hand, dass Nutzer A (mit dem niedrigen Pfadverlust) ein entsprechend hohes *CIR_{A}* aufweist und Nutzer *B* ein entsprechend niedriges *CIR_{B}.* Gerade die Sensorknoten mit den größten Pfadverlusten und damit den niedrigsten *CIRs* bestimmen jedoch die Servicequalität *QoS* ("Quality of Service") eines Mobilfunknetzes. *QoS* steht für eine Vielzahl von Qualitätsanforderungen bei der unter anderem Einflussgrößen wie Paketverlustrate und Latenzzeit eingehen [2].

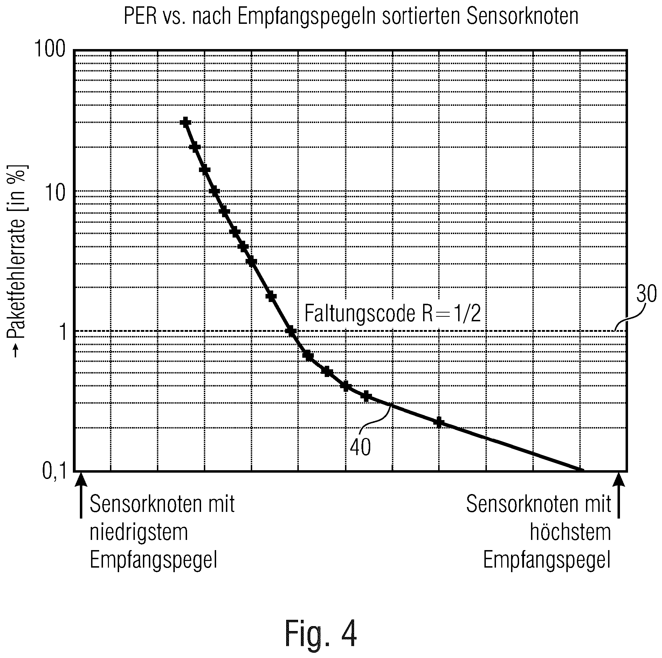

Fig. 4 zeigt hierzu ein exemplarisches Beispiel. Im Detail zeigt Fig. 4 in einem Diagramm die Paketfehlerrate 40, PER (Packet Error Rate), aufgetragen über die nach ihren Empfangspegeln sortierten Teilnehmer (z.B. Sensorknoten) einer Funkzelle. Ganz links befindet sich der Teilnehmer, der mit dem niedrigsten Empfangspegel bzw. *CIR* an der Basisstation ankommt und eine entsprechend hohe Paketfehlerrate aufweist. Ganz rechts die Teilnehmer mit den höchsten *CIRs* und einer entsprechend niedrigen Paketfehlerrate.

Wird nun als Qualitätsanforderung 30 beispielsweise eine Paketfehlerrate von 1% für alle in der Zelle vorhandenen Teilnehmer definiert, so wird deutlich, dass eine bestimmte Knotenanzahl (in Fig. 4 circa 40% aller Teilnehmer) diese Forderung nicht erfüllt. Die Teilnehmer mit sehr niedrigen Empfangspegeln haben bspw. Paketfehlerraten größer 30%.

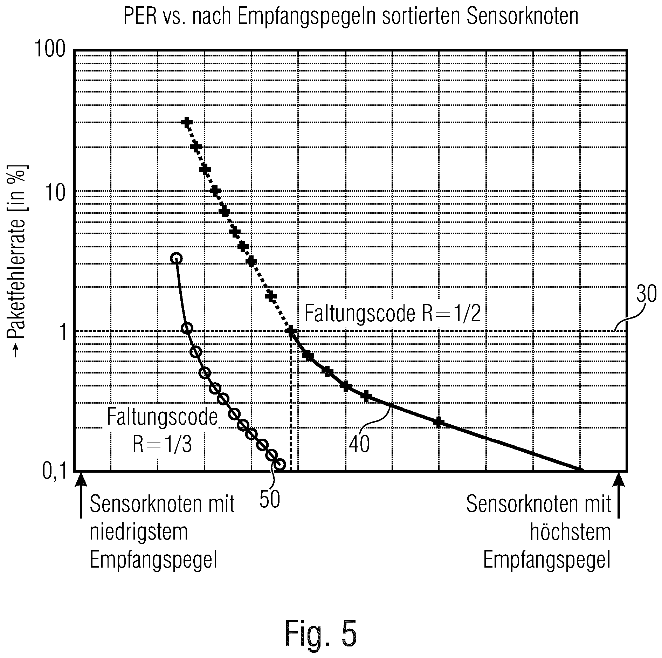

Es kann nun mit einigen, oben beschrieben Maßnahmen versucht werden, mehr Teilnehmer unter die PER-Schwelle von 1% zu bringen. Wird beispielsweise eine adaptive Kanalcodierung verwendet, dann können die Teilnehmer mit den niedrigeren Empfangspegeln eine besser geschützte Faltungscodierung verwenden. Dies sei schematisch in Fig. 5 gezeigt. Im Detail zeigt Fig. 5 in einem Diagramm Paketfehlerraten 40 und 50 aufgetragen über die nach ihrem Empfangspegel sortierten Sensorknoten und Verwendung von adaptiver Kanalcodierung mit den Raten 1/2 und 1/3. Die bereits aus Fig. 4 bekannte, durch Paketfehlerrate 40 verwendet beispielhaft einen Faltungscode mit Rate 1/2, während bei der Paketfehlerrate 50 beispielhaft ein Faltungscode mit der Rate 1/3 zum Einsatz kommt. Wird also für die Teilnehmer mit den niedrigen Empfangspegeln einen besser geschützten Code verwendet, dann lassen sich im Vergleich zu Fig. 3 deutlich mehr Teilnehmer unter die PER-Schwelle 30 von 1% drücken. Wie die Coderatenanpassung für die einzelnen Teilnehmer im Detail erfolgen kann, wird an späterer Stelle noch erläutert.

Insgesamt lässt sich aber festhalten, dass die bekannten Maßnahmen zur Steigerung der Zellkapazität oft sehr schnell an ihre Grenzen stoßen, da sie für ein einfaches IOT-System oftmals zu aufwendig und damit kostenintensiv sind.

Im Folgenden werden daher Ausführungsbeispiele beschrieben, die die Durchkommenswahrscheinlichkeit für Teilnehmer mit schlechten Empfangsbedingungen oder hohen QoS Anforderungen in Kommunikationssystemen mit hoher Teilnehmerdichte erhöhten.

### 1. Eigener Frequenzbereich für Teilnehmer mit permanent schlechten Empfangsbedingungen

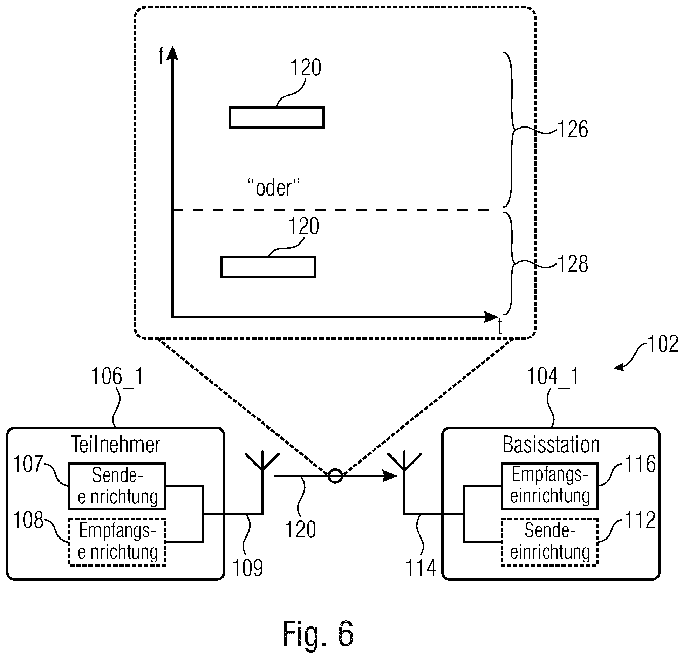

Fig. 6 zeigt ein schematisches Blockschaltbild eines Kommunikationssystems 102 mit einer Basisstation 104_1 und einem Teilnehmer 106_1, gemäß einem Ausführungsbeispiel der vorliegenden Erfindung. Obwohl in Fig. 6 aus Veranschaulichungsgründen nur ein Teilnehmer 106_1 gezeigt ist, sei darauf hingewiesen, dass das Kommunikationssystem 102 bei Ausführungsbeispielen eine Vielzahl von (z.B. untereinander unkoordinierten) Teilnehmern 106_1-106_n aufweisen kann, wie z.B. 10, 100, 1.000, 10.000 oder sogar 100.000 Teilnehmer oder mehr (vgl. Fig. 1). Ferner ist es möglich, dass das Kommunikationssystem 102 auch mehr als eine Basisstation aufweist. Beispielsweise kann das Kommunikationssystem 102 zumindest zwei Basisstationen 104_1-104_m aufweisen, wobei jeder der Basisstationen 104_1-104_m eine Funkzelle zugeordnet sein kann.

Der Teilnehmer 106_1 ist konfiguriert, um Daten 120 zu der Basisstation 104_1 des Kommunikationssystems 102 zu senden, wobei der Teilnehmer 106_1 konfiguriert ist, um in Abhängigkeit von einem Qualitätskriterium zumindest einer vorangehenden Übertragung zwischen dem Teilnehmer 106_1 und der Basisstation 104_1, die Daten 120
- in einem ersten Frequenzbereich 126, oder
- in einem zweiten Frequenzbereich 128
zu übertragen, wobei der erste Frequenzbereich 126 und der zweite Frequenzbereich 128 unterschiedlich sind.

Die Basisstation 104_1 ist konfiguriert, um die von dem Teilnehmer 106_1 gesendeten Daten 120 zu empfangen, wobei die Daten in Abhängigkeit von einem Qualitätskriterium zumindest einer vorangehenden Übertragung zwischen dem Teilnehmer 106_1 und der Basisstation 104, die Daten 120
- in dem ersten Frequenzbereich 126, oder
- in dem zweiten Frequenzbereich 128
übertragen werden, wobei der erste Frequenzbereich 126 und der zweite Frequenzbereich 128 unterschiedlich sind.

Bei Ausführungsbeispielen können der erste Frequenzbereich 126 und der zweite Frequenzbereich 128 aneinander angrenzen (siehe Fig. 6) oder voneinander beabstandet sein.

Das Qualitätskriterium der zumindest einen vorangehenden Übertragung zwischen dem Teilnehmer 106_1 und der Basisstation 104_1 ist zumindest eines aus
- einem Empfangspegel der zumindest einen vorangehenden Übertragung,
- einer Bitfehlerrate der zumindest einen vorangehenden Übertragung,
- einer Blockfehlerrate der zumindest einen vorangehenden Übertragung,
- einer Paketfehlerrate der zumindest einen vorangehenden Übertragung,
- einem Signal-zu-Rausch Verhältnis der zumindest einen vorangehenden Übertragung,
- einem Signal-zu-Interferenz Verhältnis der zumindest einen vorangehenden Übertragung,
- im Falle von mehreren vorangehenden Übertragungen, einem Verhältnis zwischen einer Anzahl an detektierten Übertragungen und einer Anzahl an nicht detektierten Übertragungen.

Bei Ausführungsbeispielen werden die Daten 120 in dem ersten Frequenzbereich 126 übertragen werden, wenn das Qualitätskriterium in einem ersten Qualitätskriteriums-Bereich liegt, z.B. wenn der Empfangspegel in einem ersten Empfangspegelbereich (z.B. 0 bis - 115 dBm) liegt, oder wenn das Qualitätskriterium größer gleich einer Qualitätskriteriums-Schwelle ist, z.B. wenn der Empfangspegel größer oder gleich einer Empfangspegelschwelle (z.B. -115 dBm) ist.

Dementsprechend werden die Daten 120 bei Ausführungsbeispielen in dem zweiten Frequenzbereich 128 übertragen, wenn das Qualitätskriterium in einem zweiten Qualitätskriteriums-Bereich liegt, z.B. wenn der Empfangspegel in einem zweiten Empfangspegelbereich (z.B. -115 dBm bis -∞) liegt, oder wenn das Qualitätskriterium kleiner als die Qualitätskriteriums-Schwelle ist, z.B. wenn der Empfangspegel kleiner als die Empfangspegelschwelle (z.B. -115 dBm) ist.

Natürlich können bei Ausführungsbeispielen die Daten 120 auch in Abhängigkeit des Qualitätskriteriums in mehr als zwei unterschiedlichen Frequenzbereichen, wie z.B. in drei, vier oder fünf Frequenzbereichen, übertragen werden, denen jeweils ein jeweiliger Qualitätskriteriumsbereich zugeordnet ist, oder die jeweils durch jeweilige Qualitätskriteriums-Schwellen getrennt sind.

Bei Ausführungsbeispielen ist die zumindest eine vorangehende Übertragung eine Übertragung (z.B. Downlink-Datenübertragung oder Baken-Übertragung) von der Basisstation 104_1 zu dem Teilnehmer 106_1 sein. In diesem Fall kann der Teilnehmer 106_1 das Qualitätskriterium der zumindest einen vorangehenden Übertragung selber ermitteln, d.h. basierend auf der empfangen Übertragung der Basisstation 104_1.

Alternativ ist bei Ausführungsbeispielen die zumindest eine vorangehende Übertragung eine Übertragung (z.B. Uplink-Datenübertragung) von dem Teilnehmer 106_1 zu der Basisstation 104_1 sein. In diesem Fall kann die Basisstation 104_1 das Qualitätskriterium basierend auf der empfangen Übertragung des Teilnehmers 106_1 ermitteln und eine Datenübertragung (z.B. Downlink-Datenübertragung) zu dem Teilnehmer 106_1 senden, wobei die Datenübertragung zu dem Teilnehmer 106_1 eine Information über das Qualitätskriterium aufweist.

Bei Ausführungsbeispielen kann der Teilnehmer 106_1 eine Sendeeinrichtung (oder Sendemodul, oder Transmitter) 107 aufweisen, die ausgebildet ist, um eine Übertragung (z.B. eine Uplink-Datenübertragung) zu senden. Die Sendeeinrichtung 107 kann mit einer Antenne 109 des Teilnehmers 106_1 verbunden sein. Optional kann der Teilnehmer 106_1 eine Empfangseinrichtung (oder Empfangsmodul, oder Receiver) 108 aufweisen, die ausgebildet ist, um eine Übertragung zu empfangen. Die Empfangseinrichtung 108 kann mit der Antenne 109 oder einer weiteren (separaten) Antenne des Teilnehmers 106_1 verbunden sein. Der Teilnehmer 106_1 kann auch eine kombinierte Sendeempfangseinrichtung (Transceiver) aufweisen.

Bei Ausführungsbeispielen kann die Basisstation 104_1 eine Empfangseinrichtung (oder Empfangsmodul, oder Receiver) 116 aufweisen, die ausgebildet ist, um eine Übertragung (z.B. Uplink-Datenübertragung) zu empfangen. Die Empfangseinrichtung 116 kann mit einer Antenne 114 der Basisstation 104_1 verbunden sein. Optional kann die Basisstation 104_1 eine Sendeeinrichtung (oder Sendemodul, oder Transmitter) 112 aufweisen, die ausgebildet ist, um eine Übertragung (z.B. Downlink-Datenübertragung oder Baken-Übertragung) zu senden. Die Sendeeinrichtung 112 kann mit der Antenne 114 oder einer weiteren (separaten) Antenne der Basisstation 104_1 verbunden sein. Die Basisstation 104_1 kann auch eine kombinierte Sendeempfangseinrichtung (Transceiver) aufweisen.

Bei Ausführungsbeispielen können der Teilnehmer 106_1 und die Basisstation 104_1 konfiguriert sein, um Daten basierend auf dem sog. Telegram-Splitting-Verfahren [3] zu übertragen, wie dies beispielsweise in ETSI TS 103 357 definiert ist. Hierbei werden die Daten (z.B. ein Datenpaket mit den Daten) senderseitig in eine Mehrzahl von Teil-Datenpaketen (sog. "radio bursts") aufgeteilt und die Teil-Datenpakete entsprechend eines Sprungmusters in der Zeit und/oder in der Frequenz verteilt übertragen, wobei die Teil-Datenpakete empfängerseitig wieder zusammenfügt (oder kombiniert) werden, um die ursprünglichen Daten zu erhalten. Jedes der Teil-Datenpakete enthält dabei nur einen Teil der zu übertragenden Daten. Die Teil-Datenpakete können ferner kanalcodiert sein, so dass zum fehlerfreien Decodieren der Daten nicht alle Teil-Datenpakete, sondern nur ein Teil der Teil-Datenpakete erforderlich ist.

Die zeitliche Verteilung der Mehrzahl von Teil-Datenpaketen kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen angeben, mit denen die Teil-Datenpakete gesendet werden. Beispielsweise kann ein erstes Teil-Datenpaket zu einem ersten Sendezeitpunkt (oder in einem ersten Sendezeitschlitz) und ein zweites Teil-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Teil-Datenpaketen können Sendepausen vorhanden sein in denen nicht gesendet wird. Die Teil-Datenpakete können sich auch zeitlich überlappen (überschneiden).

Ein Frequenzsprungmuster kann eine Abfolge von Sendefrequenzen oder Sendefrequenzsprüngen angeben, mit denen die Teil-Datenpakete gesendet werden. Beispielsweise kann ein erstes Teil-Datenpaket mit einer ersten Sendefrequenz (oder in einem ersten Frequenzkanal) und ein zweites Teil-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Teil-Datenpaketen auch sowohl in der Zeit- als auch in der Frequenz verteilt übertragen werden. Die Verteilung der Mehrzahl von Teil-Datenpaketen in der Zeit und in der Frequenz kann entsprechend einem Zeit- und Frequenzsprungmuster erfolgen, welches die Kombination aus einem Zeitsprungmuster und einem Frequenzsprungmuster ist, d.h. eine Abfolge von Sendezeitpunkten oder Sendezeitabständen mit denen die Teil-Datenpakete übertragen werden, wobei den Sendezeitpunkten (oder Sendezeitabständen) Sendefrequenzen (oder Sendefrequenzsprünge) zugeordnet sind.

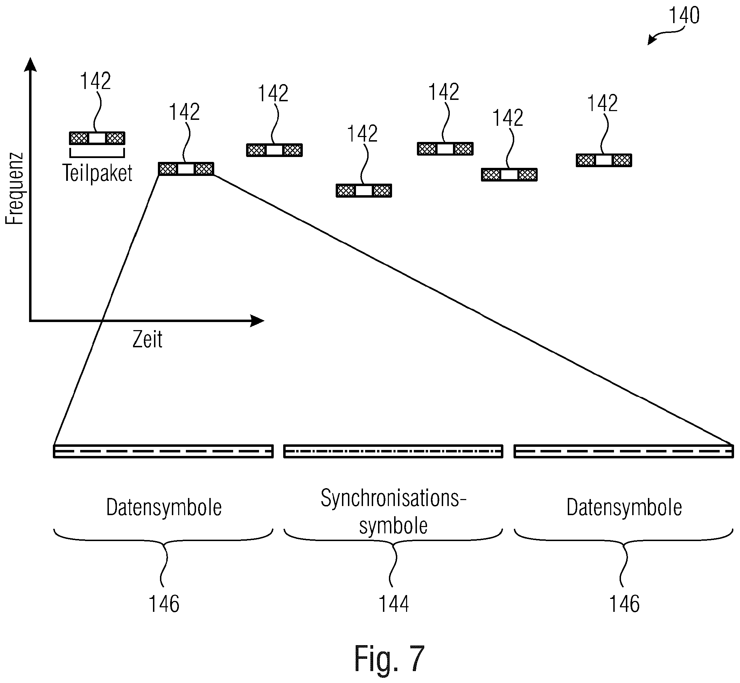

Fig. 7 zeigt in einem Diagramm eine Belegung des Übertragungskanals bei der Übertragung von einer Mehrzahl von Teil-Datenpaketen 142 entsprechend eines Sprungmuster (Zeit- und Frequenzsprungmusters) 140. Dabei beschreibt die Ordinate die Frequenz und die Abszisse die Zeit.

Wie in Fig. 7 zu erkennen ist, können die Daten (z.B. ein Datenpaket mit den Daten) beispielhaft auf n = 7 Teil-Datenpakete 142 aufgeteilt werden und entsprechend eines Sprungmusters 140 in der Zeit und der Frequenz verteilt übertragen werden.

Wie in Fig. 7 weiter zu erkennen ist, können die Mehrzahl von Teil-Datenpaketen 142 neben Daten (Datensymbole 146 in Fig. 7) auch Pilotsequenzen (Pilotsymbole (oder Synchronisationssymbole) 144 in Fig. 7) enthalten, basierend auf denen empfängerseitig die Teil-Datenpakete 142 in einem Empfangssignal 120 oder Empfangsdatenstrom detektiert werden können.

Bezogen auf Fig. 6 können die Daten 120 bei Ausführungsbeispielen in Abhängigkeit von dem Qualitätskriterium entsprechend eines Sprungmusters 140 (Zeitsprungmuster, Frequenzsprungmuster oder Zeit- und Frequenzsprungmuster) in dem ersten Frequenzbereich 126 oder dem zweiten Frequenzbereich 128 übertragen werden.

Optional können für die Übertragung der Daten 120 in den unterschiedlichen Frequenzbereichen 126 und 128 unterschiedliche Sprungmuster zum Einsatz kommen. So können die Daten 120 in dem ersten Frequenzbereich 126 entsprechend eines ersten Sprungmusters übertragen werden, während die Daten 120 in dem zweiten Frequenzbereich 128 entsprechend eines zweiten Sprungmusters übertragen werden, wobei das erste Sprungmuster und das zweite Sprungmuster unterschiedlich sind.

Optional können den unterschiedlichen Frequenzbereichen 126 und 128 auch unterschiedliche Gruppen von Sprungmustern zugewiesen sein. So kann dem ersten Frequenzbereich 126 eine erste Gruppe von Sprungmustern zugewiesen sein, während dem zweiten Frequenzbereich 128 eine zweite Gruppe von Sprungmustern zugewiesen sein kann, wobei für die Übertragung der Daten entsprechend ein Sprungmuster aus der jeweiligen Gruppe von Sprungmustern verwendet wird.

Im Folgenden werden detaillierte Ausführungsbeispiele des in Fig. 6 gezeigten Kommunikationssystems 102 näher beschrieben.

Hierbei wird im Folgenden beispielhaft von einem Kommunikationssystem 102 ausgegangen, in welchem das Senden der Datenpakete eigeninitiativ durch die Teilnehmer 106_1-106_n (z.B. Sender) im Wettbewerbsverfahren erfolgt, wobei die Sendezeitpunkte nicht vorab zugewiesen werden (engl. "contention-based random access"). Weiterhin wird davon ausgegangen, dass die Teilnehmer (z.B. Sender) ortsfest, d.h. ohne relevante Bewegung innerhalb der Funkzelle, sind. Somit kann davon ausgegangen werden, dass der Pfadverlust der Funkausbreitung von jedem Teilnehmer (z.B. Sender) zur jeweils zugeordneten Basisstation näherungsweise zeitinvariant ist. Der Empfangspegel eines Teilnehmers (z.B. Senders) bei der Basisstation ist damit näherungsweise konstant.

Bei Ausführungsbeispielen kann allen Teilnehmern (z.B. Sensorknoten) 106_1-106_n einer Funkzelle, deren Qualitätskriterium (z.B. Empfangspegel) unterhalb einer vorgebbaren Qualitätskriteriumsschwelle (z.B. Pegelschwelle, wie z.B. von X dBm) liegen, ein eigener Frequenzbereich 126 und 128 zur Verfügung gestellt werden. In jeder Funkzelle findet dadurch eine Aufspaltung aller in der Funkzelle vorhandenen Teilnehmer (z.B. Sensorknoten) 106_1-106_n auf z.B. zwei verschiedene Frequenzbereiche (im Folgenden der Einfachheit halber als "unterer" und "oberer" Frequenzbereich bezeichnet) statt, wobei deren Bandbreiten durchaus unterschiedlich sein können. Anders als bei der Underlay-Overlay Zellstrukturanordnung (siehe oben) werden beide Frequenzbereich 126 und 128 von der gleichen Basisstation 104_1 versorgt und decken geometrisch auch das gleiche Zellgebiet ab.

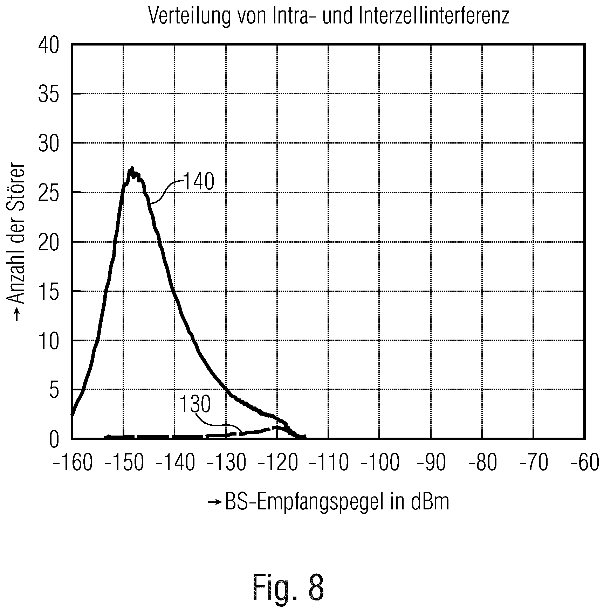

Fig. 8 zeigt in einem Diagramm eine Verteilung von Intrazellinterferenz 130 und Interzellinterferenz 140 für diejenigen Teilnehmer, die bedingt dadurch, dass deren Empfangsleistung beispielhaft als Qualitätskriterium unterhalb einer Empfangsleistungsschwelle liegt, Daten im eigenem (unteren) Frequenzbereich übertragen, für eine Clustergröße von K=1. Dabei beschreibt die Ordinate die Anzahl an Störern und die Abszisse den Basisstations-Empfangspegel in dBm.

Fig. 8 verdeutlicht hierbei die Abspaltung der schwächsten Teilnehmer (z.B. Sensorknoten) in einen eigenen Frequenzbereich 128. An der Verteilung der Kurve 130 ist deutlich zu erkennen, dass sich nur noch Teilnehmer unterhalb einer Qualitätskriteriumsschwelle (z.B. mit einer Empfangsleistung von weniger als -115 dBm) in der eigenen Funkzelle im unteren Frequenzbereich 128 befinden (siehe Fig. 2a und 2b zum Vergleich). Da eine derartige Aufspaltung auch in allen anderen benachbarten Funkzellen stattfindet kann, ergibt sich für die Interzellinterferenz aus den benachbarten Zellen ebenfalls eine Verteilung die erst unterhalb der Qualitätskriteriumsschwelle (z.B. des Schwellwertes X von -115 dBm) beginnt. Wird die Verteilung der Interzellinterferenz aus Fig. 8 mit der von Fig. 2b verglichen, dann zeigt sich deutlich, dass nur noch die schwächsten Störer aus den benachbarten Zellen in diesem Frequenzbereich verblieben sind. Für jeden einzelnen Teilnehmer in diesem unteren Frequenzbereich 128 ergibt sich nach der Aufspaltung ein deutlich günstigeres CIR.

Bei der Dimensionierung der beiden aufzuteilenden Frequenzbereiche 126 und 128 in einen unteren Frequenzbereich (mit Bandbreite *bᵤ* für die Teilnehmer unterhalb der Qualitätskriteriumsschwelle (z.B. empfangsschwächsten Teilnehmer)) und einen oberen Frequenzbereich (mit Bandbreite *bₒ*) kann sinnvollerweise von Vielfachen der System-Grund-Bandbreite b ausgegangen werden. Bei GSM liegt diese Bandbreite bei *b = 200 kHz* und beim loT-Verfahren namens "Telegram Splitting Multiple Access" (TSMA) [3,4,5,6] liegt sie bei *b = 100 kHz.* Üblicherweise sollte das Bandbreitenverhältnis von *bᵤ*/ *bₒ* im Bereich zwischen 1/3 und 1 liegen. Dies lässt sich mit der größeren Empfindlichkeit der empfangsschwächeren Teilnehmer (z.B. Sensorknoten) gegenüber Interferenz begründen. Die Variation der Empfangspegel sollte im unteren Band 128 nicht allzu groß sein. Da es darüber hinaus auch anzustreben ist, ein näherungsweise gleiches Verkehrsaufkommen in beiden Bändern *bᵤ* und *bₒ* (126 und 128) zu erzeugen, sollte die relative Schwelle Xbevorzugt bei ungefähr *bᵤ*/*bₒ* •*50*% liegen.

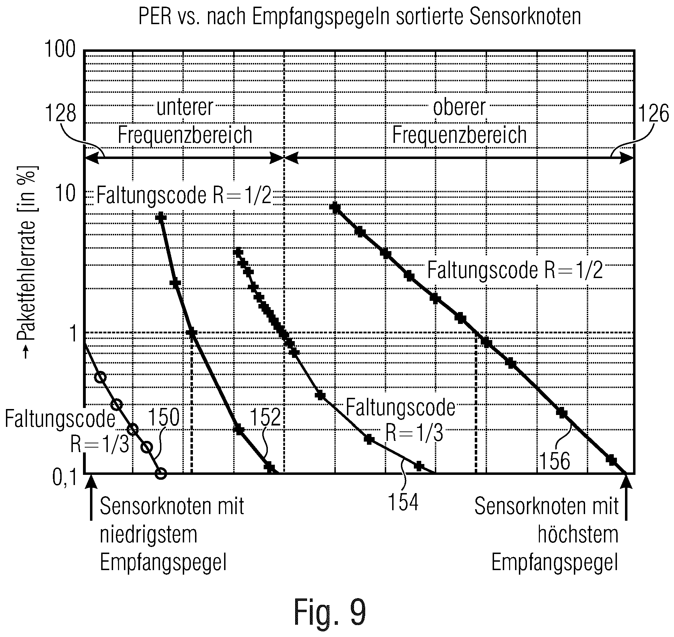

Fig. 9 zeigt in einem Diagramm Paketfehlerraten für unterschiedliche Faltungscodes mit den Raten 1/2 und 1/3 über die nach ihren Empfangspegel beispielhaft als Qualitätskriterium sortierten Teilnehmern bei Verwendung von zwei getrennten Frequenzbereichen 126 und 128. Dabei beschreibt die Ordinate die Paketfehlerrate in Prozent und die Abszisse den Empfangspegel. In Fig. 9 beschreibt eine erste Kurve 150 eine Paketfehlerrate bei einem Faltungscode mit der Rate 1/3 für Teilnehmer im unteren Frequenzbereich 128, eine zweite Kurve 152 eine Paketfehlerrate bei einem Faltungscode mit der Rate 1/2 für Teilnehmer im unteren Frequenzbereich 128, eine dritte Kurve 154 eine Paketfehlerrate bei einem Faltungscode mit der Rate 1/3 für Teilnehmer im oberen Frequenzbereich 126, und eine vierte Kurve 156 eine Paketfehlerrate bei einem Faltungscode mit der Rate 1/2 für Teilnehmer im oberen Frequenzbereich 126.

Mit anderen Worten, Fig. 9 zeigt exemplarisch die Wirkung der entsprechend ihrer Empfangspegel vorgenommenen Aufteilung der Teilnehmer (z.B. Sensorknoten) auf die beiden Frequenzbereiche 126 und 128. Beim unteren Frequenzbereich 128 findet eine signifikante Reduzierung der Interferenzleistung *I* statt, was letztendlich zu einer deutlich günstigeren Verteilung der *CIRs* führt. Da im oberen Frequenzbereich 126 keine Rücksicht mehr auf die Leistungsfähigkeit (engl. performance) der ausgesparten Teilnehmer (z.B. Sensorknoten) mit den niedrigen Empfangspegeln genommen wird, kann die Gesamtzahl der Teilnehmer deutlich erhöht werden, was zu einer deutlichen Steigerung der spektralen Kapazität führt. Unter spektraler Kapazität wird nach [7] der maximal versorgbare Verkehr (in kbit/s) pro Fläche und pro Bandbreite bei einem geforderten QoS verstanden.

Durch die getrennte Nutzung der beiden Frequenzbereiche 126 und 128 ist somit eine deutlich höhere spektrale Kapazität erzielbar, als wenn beide Frequenzbereiche 126 und 128 von allen Teilnehmern (z.B. Nutzern) gemeinsam genutzt werden.

Es sei an dieser Stelle darauf hingewiesen, dass die Aufspaltung aller in der Zelle vorhandenen Teilnehmer auch auf mehr wie die zwei verschiedenen Frequenzbereiche erfolgen kann.

Bei manchen Ausführungsbeispielen kann ein Teilnehmer die richtige Auswahl bezüglich der beiden Frequenzbereiche 126 und 128 wie im Folgenden beschrieben treffen.

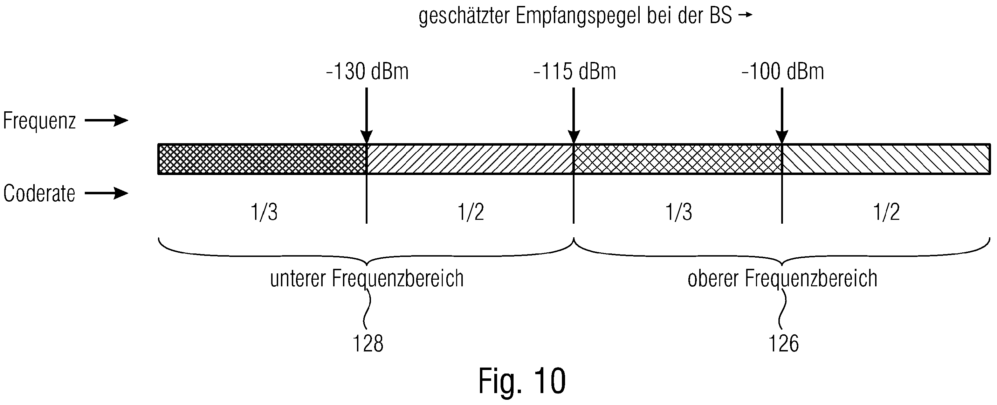

Ausgangspunkt ist die Basisstation 104_1. Diese führt beispielsweise innerhalb der jeweiligen Funkzelle eine Statistik über die Qualitätskriterien (z.B. Empfangspegel und die Paketfehlerratten, PER) aller in der Funkzelle befindlichen Teilnehmer (z.B. Sensorknoten) 106_1-106_n. Daraus kann die Basisstation 104_1 beispielsweise eine, wie in Fig. 10 grafisch dargestellte Tabelle generieren, die eine Zuordnung am Beispiel vom Empfangspegeln als Qualitätskriterium zu verschiedenen Coderaten sowie eine Zuordnung der Frequenzbereiche 126 und 128 ermöglicht. Die Tabelle wird von der Basisstation in regelmäßigen Abständen je nach der Auslastung des Kommunikationssystems 102 (und damit der Interferenzsituation) angepasst. Der Teilnehmer 106_1 kann seinerseits das Qualitätskriterium (z.B. Signalpegel) basierend auf einer von der zugeordneten Basisstation empfangenen Übertragung (z.B. Downlink-Datenübertragung oder Baken-Übertragung) schätzen, und basierend auf dem geschätzten Qualitätskriterium die Coderate für seine Aussendungen und die Zuordnung zu den beiden Frequenzbereichen 126 und 128 auf Basis der Tabelle auswählen. Initial kann der Teilnehmer (z.B. Sensorknoten) 106_1 bei Erstanmeldung im Kommunikationssystem immer im unteren Frequenzband 128 starten.

Damit der Teilnehmer (z.B. Sensorknoten) 106_1 das Qualitätskriterium (z.B. Signalpegel) der Übertragung der Basisstation 104_1 messen oder schätzten kann und auch eine Information über die Tabelle (z.B. den Inhalt der Tabelle) erhält, kann ein Rückkanal von der Basisstation 104_1 zu den Teilnehmern 106_1-106_n verwendet werden. Dieser Rückkanal kann ein eigenes Frequenzband sein, wodurch allerdings die spektrale Kapazität abnimmt. Im Falle eines eigenen Rückkanals kann die Basisstation beispielsweise via eines Link-Layer-Kommandos dem Teilnehmer die Coderate und das Frequenzband auch direkt zuweisen.

Der Rückkanal kann sich aber auch in den Uplink-Frequenzkanälen in Form einer Funkbake ("beacon") als sogenanntes "teilkoordiniertes System" verbergen. Dadurch wird kein zusätzliches Frequenzband verwendet. Die Basisstation 104_1 kann diese Funkbake, die z.B. die Pegeltabelle als Information beinhaltet, in z.B. regelmäßigen Abständen aussenden.

Im Folgenden seien noch mögliche Ausführungsbeispiele bzgl. der Aufteilung der Frequenzbereiche beschrieben.

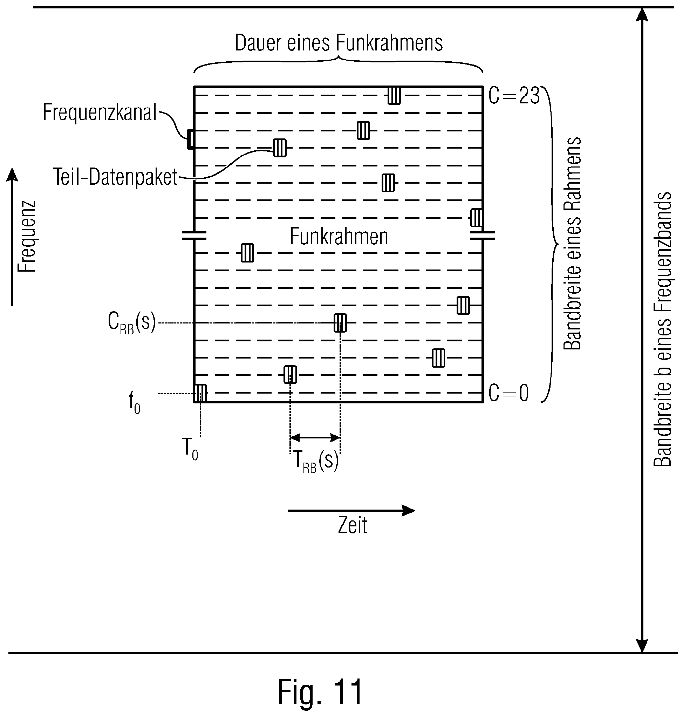

Bei GSM und NB-IoT beträgt die Bandbreite *b jeweils 200 kHz,* während sie sich beim regulären "Telegram Splitting Multiple Access" (TSMA) nach [4] auf *b = 100 kHz* beläuft. Da sowohl bei NB-IoT wie auch bei TSMA die Informationsdatenrate R deutlich niedriger ist wie die Bandbreite *b*, kann ein Funkband nochmals in *b*/*R* Frequenzkanäle unterteilt werden. Bei GSM dagegen liegt die Modulationsrate *R* in der gleichen Größenordnung wie die minimal erforderliche Bandbreite *b*.
1) Falls die Bandbreite des frequenzsprungbasierten Frames (siehe Fig. 11) bei TSMA kleiner wie die Hälfte der Bandbreite b ist, dann kann die Aufteilung in ein unteres und ein oberes Band *bᵤ* bzw. *bₒ* bereits innerhalb eines Funkbandes von beispielsweise 100 kHz erfolgen.
2) Die Verwendung von zwei oder mehreren Funkbändern für die unterschiedliche Frequenzzuordnung der beiden Bänder *bᵤ* und *bₒ* ist immer möglich. Dabei können die beiden Bänder nebeneinander liegen, müssen aber nicht.

### 2. Eigenes Zeitintervall für Teilnehmer (z.B. Sensorknoten) mit permanent schlechten Empfangsbedingungen

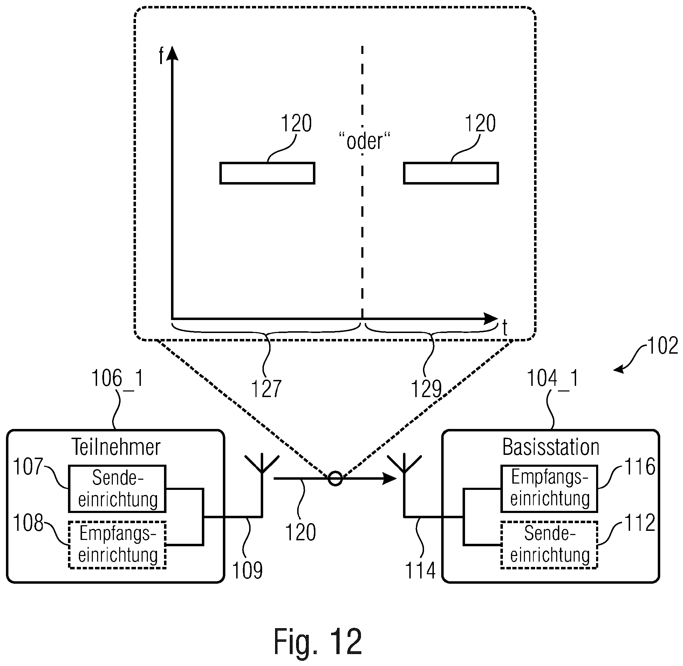

Fig. 12 zeigt ein schematisches Blockschaltbild eines Kommunikationssystems 102 mit einer Basisstation 104_1 und einem Teilnehmer 106_1, gemäß einem weiteren Ausführungsbeispiel der vorliegenden Erfindung.

Verglichen mit dem in Fig. 6 gezeigten Ausführungsbeispiel, werden bei dem in Fig. 12 gezeigten Ausführungsbeispiel die Daten 120 in Abhängigkeit von dem Qualitätskriterium der zumindest einen vorangehenden Übertragung zwischen dem Teilnehmer 106_1 und der Basisstation 104_1 nicht in unterschiedlichen Frequenzbereichen 126 und 128 (siehe Fig. 6) sondern in unterschiedlichen Zeitintervallen 127 und 129 übertragen.

Natürlich können die Daten 120 bei Ausführungsbeispielen auch in Abhängigkeit von dem Qualitätskriterium sowohl in unterschiedlichen Frequenzbereichen 126 und 128 als auch in unterschiedlichen Zeitintervallen 127 und 129 übertragen werden.

Bei Ausführungsbeispielen kann somit neben einer Frequenzaufteilung von Teilnehmern mit unterschiedlichen Qualitätskriterien (z.B. empfangsstarken und empfangsschwachen Teilnehmern (z.B. Sensorknoten)) alternativ oder in Kombination die Aufteilung auch in einer Art Zeitmultiplexverfahren erfolgen. Dabei werden die Teilnehmer, die bessere Qualitätskriterien erfüllen (z.B. empfangsstarke Teilnehmer (z.B. Sensorknoten)), zeitversetzt zu den Teilnehmern, die schlechtere Qualitätskriterien erfüllen (z.B. empfangsschwache Teilnehmer (z.B. Sensorknoten)), übertragen. Die Signalisierung der jeweiligen Zeitfenster 127 und 129 kann beispielsweise durch die Basisstation erfolgen, wie z.B. in Form einer Funkbake (engl. "beacon") oder während des Anmeldeprozesses eines neuen Teilnehmers.

### 3. Eigener Frequenzkanal oder eigenes Zeitintervall für Datenübertragungen mit hohen QoS-Anforderungen

Bei Ausführungsbeispielen können die Daten 120 in dem Kommunikationssystem 102 alternativ oder zusätzlich zu der Abhängigkeit von dem Qualitätskriterium auch in Abhängigkeit von einer Dienstgüte (QoS, qualtiy of service)
- in dem ersten Frequenzbereich 126 und/oder ersten Zeitintervall 127, oder
- in dem zweiten Frequenzbereich 128 und/oder zweiten Zeitintervall 129
übertragen werden.

So können bei Ausführungsbeispielen die Daten 120 in dem ersten Frequenzbereich 126 und/oder ersten Zeitintervall 127 übertragen werden, wenn die Dienstgüte in einem ersten Dienstgütenbereich liegt oder kleiner gleich einer Dienstgüten-Schwelle ist, während die Daten 120 in dem zweiten Frequenzbereich 128 und/oder zweiten Zeitintervall 129 übertragen werden, wenn die Dienstgüte in einem zweiten Dienstgütenbereich liegt oder größer als die Dienstgüten-Schwelle ist.

Bei Ausführungsbeispielen kann die Dienstgüte zumindest eine sein aus
- einer Latenzzeit,
- einer Reaktionszeit,
- einer maximalen Blockierrate.

Die Unterteilung von Teilnehmern 106_1-106_n (z.B. Sensorknoten) in separate Frequenzbänder 126 und 128 und/oder separate Zeitintervalle 127 und 129 kann auch aus Anwendungssicht für Anwendungen mit hohen Qualitätsanforderungen verwendet werden.

Beispielsweise haben manche Nachrichten bei der Übertragung eine höhere Priorität oder müssen innerhalb eines gewissen Zeitintervalls beim Empfänger angekommen sein. Beispiele für solche Übertragungen sind beispielsweise Alarme oder Notabschaltungen. Es gibt aber auch Anwendungen, die beispielsweise garantieren müssen, dass mindestens eine Nachricht pro Zeitintervall (z. B. pro Tag oder Monat) am Empfänger korrekt empfangen werden muss.

Damit diese Nachrichten sicherer am Empfänger ankommen, können diese Nachrichten bei Ausführungsbeispielen ausschließlich oder in Kombination mit den vorherigen Ausführungsbeispielen ebenfalls in dem eigenen Frequenzbereich 128 oder dem eigenen Zeitintervall 129 übertragen werden.

Bei Ausführungsbeispielen können somit auch Teilnehmer (z.B. Sensorknoten), die bessere Qualitätskriterien erfüllen (z.B. Teilnehmer mit guten Empfangsbedingungen), einzelne Nachrichten mit hohen QoS-Anforderungen im unteren Frequenzband 128 an die Basisstation 104_1 senden. Dies ist unproblematisch, so lange es nicht allzu häufig vorkommt.

Bei dem vorherigen Beispiel, bei welchem mindestens eine Nachricht pro Zeitintervall am Empfänger ankommen muss, können die Nachrichten eines Teilnehmers beispielsweise über das Intervall verteilt 100-mal im oberen Frequenzband 126 und nur zur Sicherheit einmal im unteren Frequenzband 128 gesendet werden.

Ist ein bidirektionales System vorhanden, kann ebenfalls im oberen Frequenzband 126 übertragen werden. Wenn die Basisstation 104_1 einer der im oberen Frequenzband 126 gesendeten Nachrichten mittels einer Empfangsbestätigung (ACK) bestätigt, muss der Teilnehmer nicht im unteren Band senden. Nur falls bis kurz vor Ende des Zeitintervalls keine Empfangsbestätigung erhalten wurde, sendet der Teilnehmer im unteren Frequenzband.

Es gibt in dem 869 MHz Band Bereiche, die für unterschiedliche maximale Sendeleistung zugelassen sind. 500 mW (27 dBm), 25 mW, (14 dBm), 5 mW (7 dBm). Damit kann z.B. der obere Frequenzbereich 126 in einem Bereich mit einer kleineren zugelassenen Sendeleistung sein.

### 4. Unterschiedliche Frequenzzeitpattern für Datenübertragungen mit hohen QoS-Anforderungen oder für schlechte vs. Gute Empfangsbedingungen

Im Folgenden werden weitere Ausführungsbeispiele des Teilnehmers 106_1 und der Basisstation 104_1 beschrieben, die für sich genommen oder in Kombination mit den oben beschriebenen Ausführungsbeispielen des Teilnehmers 106_1 und der Basisstation 104_1 Anwendung finden können.

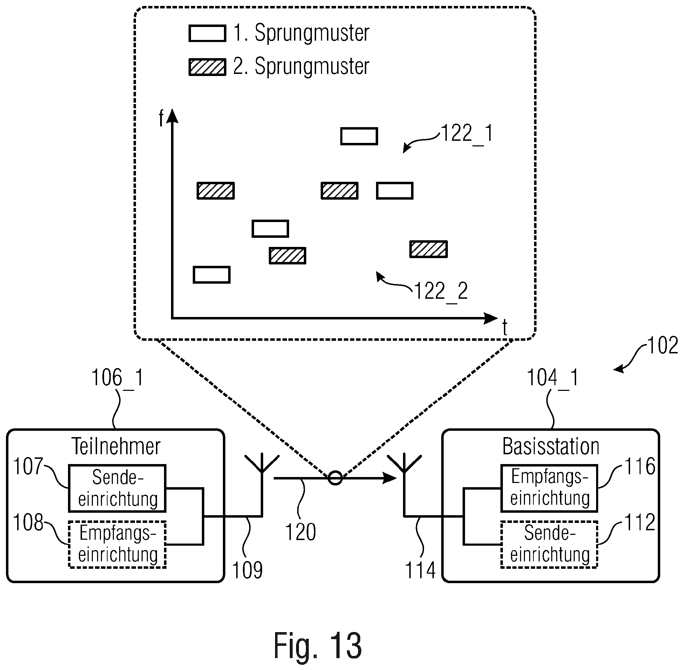

Fig. 13 zeigt ein schematisches Blockschaltbild eines Kommunikationssystems 102 mit einer Basisstation 104_1 und einem Teilnehmer 106_1, gemäß einem weiteren Ausführungsbeispiel der vorliegenden Erfindung.

Der Teilnehmer 106_1 ist konfiguriert, um Daten 120 entsprechend eines Sprungmusters 122_1 oder 122_2 in der Zeit und/oder Frequenz verteilt zu der Basisstation 104_1 des Kommunikationssystems 102 zu senden und/oder von der Basisstation 104_1 des Kommunikationssystems 102 zu empfangen, wobei das für die Übertragung der Daten 120 verwendete Sprungmuster 122_1 oder 122_2
- von einer Position des Teilnehmers 106_1 in Bezug auf die Basisstation 104_1, und/oder
- von einem Qualitätskriterium zumindest einer vorangehenden Übertragung zwischen dem Teilnehmer 106_1 und der Basisstation 104_1, und/oder
- einer (z.B. gemessenen oder ermittelten) Kanallast vor der Übertragung der Daten 120, und/oder
- von einer geforderten Dienstgüte der Daten 120,
abhängig ist.

Die Basisstation 104_1 kann konfiguriert sein, um Daten 120 entsprechend eines Sprungmuster 122_1 oder 122_2 in der Zeit und/oder Frequenz verteilt zu einem Teilnehmer 106_1 des Kommunikationssystems 102 zu senden und/oder von dem Teilnehmer 106_1 des Kommunikationssystems 102 zu empfangen, wobei das für die Übertragung der Daten 120 verwendete Sprungmuster 122_1 oder 122_2
- von einer Position des Teilnehmers 106_1 in Bezug auf die Basisstation 104_1, und/oder
- von einem Qualitätskriterium zumindest einer vorangehenden Übertragung zwischen dem Teilnehmer 106_1 und der Basisstation 104_1, und/oder
- einer (z.B. gemessenen oder ermittelten) Kanallast vor der Übertragung der Daten 120, und/oder
- von einer geforderten Dienstgüte der Daten 120,
abhängig ist.

Bei Ausführungsbeispielen können die Daten 120 entsprechend eines ersten Sprungmusters 122_1 bzw. entsprechend eines aus einer ersten Gruppe von Sprungmustern ausgewähltes Sprungmuster 122_1 übertragen werden, wenn die Position des Teilnehmers 106_1 in einen ersten geografischen Bereich eines von der Basisstation 106_1 abgedeckten geografischen Gebiets fällt, während die Daten 120 entsprechend eines zweiten Sprungmusters 122_2 bzw. entsprechend eines aus einer zweiten Gruppe von Sprungmustern ausgewähltes Sprungmuster 122_2 übertragen werden können, wenn die Position des Teilnehmers 106_1 in einen zweiten geografischen Bereich des von der Basisstation 106_1 abgedeckten geografischen Gebiets fällt, wobei das erste Sprungmuster 122_1 und das zweite Sprungmuster 122_2 unterschiedlich sind, wobei der erste Bereich und der zweite Bereich unterschiedlich sind.

Bei Ausführungsbeispielen können die Daten 120 entsprechend eines ersten Sprungmusters 122_1 bzw. entsprechend eines aus einer ersten Gruppe von Sprungmustern ausgewähltes Sprungmuster 122_1 übertragen werden, wenn das Qualitätskriterium der zumindest einen vorangehenden Übertragung in einem ersten Qualitätskriteriums-Bereich liegt oder größer gleich einer Qualitätskriteriums-Schwelle ist, während die Daten 120 entsprechend eines zweiten Sprungmusters 122_2 bzw. entsprechend eines aus einer zweiten Gruppe von Sprungmustern ausgewähltes Sprungmuster 122_2 übertragen werden können, wenn das Qualitätskriterium der zumindest einen vorangehenden Übertragung in einem zweiten Qualitätskriteriums-Bereich liegt oder kleiner als die Qualitätskriteriums-Schwelle ist.

Das Qualitätskriterium der zumindest einen vorangehenden Übertragung zwischen dem Teilnehmer 106_1 und der Basisstation 104 kann beispielsweise zumindest eines sein aus
- einem Empfangspegel der zumindest einen vorangehenden Übertragung,
- einer Bitfehlerrate der zumindest einen vorangehenden Übertragung,
- einer Blockfehlerrate der zumindest einen vorangehenden Übertragung,
- einer Paketfehlerrate der zumindest einen vorangehenden Übertragung,
- einem Signal-zu-Rausch Verhältnis der zumindest einen vorangehenden Übertragung,
- einem Signal-zu-Interferenz Verhältnis der zumindest einen vorangehenden Übertragung,
- im Falle von mehreren vorangehenden Übertragungen, einem Verhältnis zwischen einer Anzahl an detektierten Übertragungen und einer Anzahl an nicht detektierten Übertragungen.

Bei Ausführungsbeispielen kann die zumindest eine vorangehende Übertragung eine Übertragung (z.B. Downlink-Datenübertragung oder Baken-Übertragung) von der Basisstation 104_1 zu dem Teilnehmer 106_1 sein. In diesem Fall kann der Teilnehmer 106_1 das Qualitätskriterium der zumindest einen vorangehenden Übertragung selber ermitteln, d.h. basierend auf der empfangen Übertragung der Basisstation 104_1.

Bei Ausführungsbeispielen kann die zumindest eine vorangehende Übertragung eine Übertragung (z.B. Uplink-Datenübertragung) von dem Teilnehmer 106_1 zu der Basisstation 104_1 sein. In diesem Fall kann die Basisstation 104_1 das Qualitätskriterium basierend auf der empfangen Übertragung des Teilnehmers 106_1 ermitteln und eine Datenübertragung (z.B. Downlink-Datenübertragung) zu dem Teilnehmer 106_1 senden, wobei die Datenübertragung zu dem Teilnehmer 106_1 eine Information über das Qualitätskriterium aufweist.

Bei Ausführungsbeispielen können die Daten 120 entsprechend eines ersten Sprungmusters 122_1 bzw. entsprechend eines aus einer ersten Gruppe von Sprungmustern ausgewähltes Sprungmuster 122_1 übertragen werden, wenn die Dienstgüte der Daten in einem ersten Dienstgütenbereich liegt oder kleiner gleich einer Dienstgüten-Schwelle ist, während die Daten 120 entsprechend eines zweiten Sprungmusters 122_2 bzw. entsprechend eines aus einer zweiten Gruppe von Sprungmustern ausgewähltes Sprungmuster 122_2 übertragen werden können, wenn die Dienstgüte in einem zweiten Dienstgütenbereich liegt oder größer als die Dienstgüten-Schwelle ist.

Bei Ausführungsbeispielen kann die Dienstgüte zumindest eine sein aus
- einer Latenzzeit,
- einer Reaktionszeit,
- einer maximalen Blockierrate.

Bei Ausführungsbespielen können die Daten 120 entsprechend eines ersten Sprungmusters 122_1 bzw. entsprechend eines aus einer ersten Gruppe von Sprungmustern ausgewähltes Sprungmuster 122_1 übertragen werden, wenn die gemessene oder ermittelte Kanallast (z.B. (kurz) vor dem Senden der Daten 120) in einem ersten Kanallastbereich liegt oder kleiner gleich einer Kanallastschwelle ist, während die Daten 120 entsprechend eines zweiten Sprungmusters 122_2 bzw. entsprechend eines aus einer zweiten Gruppe von Sprungmustern ausgewähltes Sprungmuster 122_2 übertragen werden können, wenn die gemessene oder ermittelte Kanallast (z.B. (kurz) vor dem Senden der Daten 120) in einem zweiten Kanallastbereich liegt oder größer als die Kanallastschwelle ist.

Natürlich können bei Ausführungsbeispielen auch mehr als zwei Sprungmuster bzw. mehr als zwei Gruppen von Sprungmustern für die Übertragung der Daten 120 verwendet werden. Beispielsweise kann das von der Basisstation 104_1 bediente geografische Gebiet in zumindest drei geografische Bereiche aufgeteilt werden, wobei jedem der zumindest drei geografischen Bereiche ein jeweiliges Sprungmuster oder eine jeweilige Gruppe von Sprungmustern zugeordnet ist. Genauso ist es möglich, dass eine Aufteilung in zumindest drei Qualitätskriteriumsbereiche (oder Dienstgütenbereiche oder Kanallastbereiche) erfolgt, wobei jedem der zumindest drei Qualitätskriteriumsbereiche (oder Dienstgütenbereiche oder Kanallastbereiche) ein jeweiliges Sprungmuster oder eine jeweilige Gruppe von Sprungmustern zugeordnet ist.

Bei Ausführungsbeispielen kann der Teilnehmer 106_1 eine Sendeeinrichtung (oder Sendemodul, oder Transmitter) 107 aufweisen, die ausgebildet ist, um eine Übertragung (z.B. eine Uplink-Datenübertragung) zu senden. Die Sendeeinrichtung 107 kann mit einer Antenne 109 des Teilnehmers 106_1 verbunden sein. Ferner kann der Teilnehmer 106_1 eine Empfangseinrichtung (oder Empfangsmodul, oder Receiver) 108 aufweisen, die ausgebildet ist, um eine Übertragung (z.B. Downlink-Datenübertragung oder Baken-Übertragung oder Link-Übertragung) zu empfangen. Die Empfangseinrichtung 108 kann mit der Antenne 109 oder einer weiteren (separaten) Antenne des Teilnehmers 106_1 verbunden sein. Der Teilnehmer 106_1 kann auch eine kombinierte Sendeempfangseinrichtung (Transceiver) aufweisen.

Bei Ausführungsbeispielen kann die Basisstation 104_1 eine Empfangseinrichtung (oder Empfangsmodul, oder Receiver) 116 aufweisen, die ausgebildet ist, um eine Übertragung (z.B. Uplink-Datenübertragung) zu empfangen. Die Empfangseinrichtung 116 kann mit einer Antenne 114 der Basisstation 104_1 verbunden sein. Ferner kann die Basisstation 104_1 eine Sendeeinrichtung (oder Sendemodul, oder Transmitter) 112 aufweisen, die ausgebildet ist, um eine Übertragung (z.B. Downlink-Datenübertragung oder Baken-Übertragung oder Link-Übertragung) zu senden. Die Sendeeinrichtung 112 kann mit der Antenne 114 oder einer weiteren (separaten) Antenne der Basisstation 104_1 verbunden sein. Die Basisstation 104_1 kann auch eine kombinierte Sendeempfangseinrichtung (Transceiver) aufweisen.

Wie dies bereits in Bezug auf Fig. 6 und 7 ausführlich erläutert wurde, können der Teilnehmer 106_1 und die Basisstation 104_1 konfiguriert sein, um Daten basierend auf dem sog. Telegram-Splitting-Verfahren [3] zu übertragen, wie dies beispielsweise in ETSI TS 103 357 definiert ist.

Wie bereits angedeutet wurde, können Ausführungsbeispiele des in Fig. 13 beschriebenen Kommunikationssystems 102 optional mit Ausführungsbeispielen des in den Fig. 6 bis 12 beschriebenen Kommunikationssystems 102 kombiniert werden.

So können die Daten 120 bei Ausführungsbeispielen in dem ersten Frequenzbereich 126 und/oder ersten Zeitintervall 127 entsprechend eines ersten Sprungmusters 122_1 bzw. entsprechend eines aus einer ersten Gruppe von Sprungmustern ausgewähltes Sprungmuster 122_1 übertragen werden, während die Daten 120 in dem zweiten Frequenzbereich 128 und/oder zweiten Zeitintervall 129 entsprechend eines zweiten Sprungmusters 122_2 bzw. entsprechend eines aus einer zweiten Gruppe von Sprungmustern ausgewähltes Sprungmuster 122_2 übertragen werden können.

Bei Ausführungsbeispielen können die unterschiedlichen Sprungmuster (engl. hopping pattern) unterschiedlich orthogonal zueinander sein. Die SIR von einem ersten Sprungmuster zu einem zweiten Sprungmuster ist besser als das SIR vom ersten Sprungmuster zu einem dritten oder vierten Sprungmuster. Beispielsweise kann es 16 mögliche Sprungmuster (engl. hopping pattern) geben. Damit können z.B. die Teilnehmer, deren Übertragungen bessere Qualitätskriterien aufweisen (z.B. Teilnehmer mit guten Empfangsbedingungen), die ersten acht Sprungmuster verwenden, während die Teilnehmer, dessen Übertragungen schlechtere Qualitätskriterien aufweisen (z.B. Teilnehmer mit schlechteren Empfangsbedingungen), die anderen acht Sprungmuster verwenden können.

Bei Ausführungsbeispielen können die Sprungmuster in Abhängigkeit von zumindest einem Qualitätskriterium (z.B. Empfangspegel) definiert werden. Beispielsweise können die Sprungmuster für Teilnehmer mit besseren (z.B. guten) Qualitätskriterien und die Sprungmuster für Teilnehmer mit schlechteren (z.B. schlechten) Qualitätskriterien fast orthogonal zueinander sein und sich dementsprechend (fast) nicht stören.

Bei Ausführungsbeispielen können auch ein oder mehrere Sprungmuster für Nachrichten mit hohen QoS-Anforderungen, wie z.B. Alarme, reserviert werden.

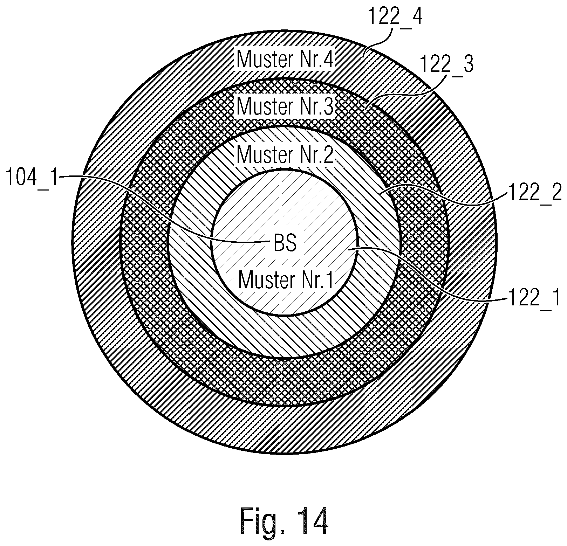

Wie dies bereits angedeutet wurde, kann das für die Übertragung der Daten 120 verwendete Sprungmuster von einer Position des Teilnehmers 106_1 in Bezug auf die Basisstation 104 abhängig sein. Hierbei ist es möglich, dass das von der Basisstation 104_1 bediente geografische Gebiet in mehrere geografische Bereiche unterteilt wird, wobei jedem der geografischen Bereiche ein jeweiliges Sprungmuster (oder eine jeweilige Gruppe von Sprungmustern) zugeordnet ist, wie dies im Folgenden anhand von Fig. 14 erläutert wird.

Fig. 14 zeigt eine schematische Ansicht einer Basisstation 104_1 sowie einer Zuordnung von vier unterschiedlichen Sprungmustern 122_1-122_4 (oder vier Gruppen von unterschiedlichen Sprungmustern) zu vier unterschiedlichen geometrischen Bereichen, die von der Basisstation 104_1 bedient werden, gemäß einem Ausführungsbeispiel. Wie in Fig. 14 beispielhaft gezeigt ist, kann das von der Basisstation 104_1 bediente geografische Gebiet in Abhängigkeit von einer Entfernung zu der Basisstation 104_1 in vier geografische Bereiche unterteilt werden, wobei ein erstes Sprungmuster 122_1 (oder eine erste Gruppe von Sprungmustern) einem ersten geografischen Bereich zugeordnet werden kann, während ein zweites Sprungmuster 122_2 (oder eine zweite Gruppe von Sprungmustern) einem zweiten geografischen Bereich zugeordnet werden kann, während ein drittes Sprungmuster 122_3 (oder eine dritte Gruppe von Sprungmustern) einem dritten geografischen Bereich zugeordnet werden kann, während ein viertes Sprungmuster 122_4 (oder eine vierte Gruppe von Sprungmustern) einem vierten geografischen Bereich zugeordnet werden kann. Die vier Sprungmuster 122_1-122_4 können hierbei unterschiedlich sein, d.h. eine andere Verteilung in der Zeit und/oder Frequenz angeben.

Mit anderen Worten, Fig. 14 zeigt eine geometrische Verteilung von Sprungmustern. Fig. 14 zeigt hierbei ein Beispiel mit vier Sprungmustern. Die vier Sprungmuster werden abhängig von der Distanz (und damit indirekt der Empfangsleistung) der Teilnehmer 106_1-106_n (zu der Basisstation 104_1) fest zugeordnet.

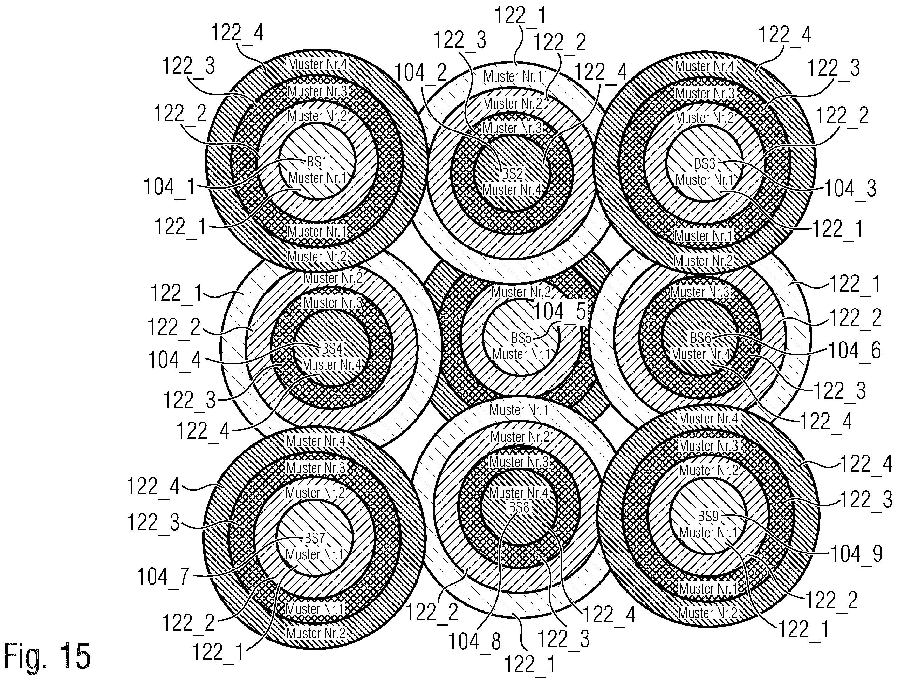

Fig. 15 zeigt eine schematische Ansicht von neun Basisstationen 104_1-104_9 sowie einer Zuordnung von vier unterschiedlichen Sprungmustern 122_1-122_4 (oder vier Gruppen von unterschiedlichen Sprungmustern) zu jeweils vier unterschiedlichen geometrischen Bereichen, die von jeweils einer der neuen Basisstationen 104_1-104_9 bedient werden, gemäß einem Ausführungsbeispiel. Wie in Fig. 15 beispielhaft gezeigt ist, kann das von einer jeweiligen Basisstation bediente geografische Gebiet in Abhängigkeit von einer Entfernung zu der jeweiligen Basisstation in vier geografische Bereiche unterteilt werden. Den geografischen Bereichen unmittelbar benachbarter Basisstationen sind dabei die vier Sprungmuster 122_1-124_4 in genau umgekehrter Reihenfolge zugeordnet.

Mit anderen Worten, Fig. 15 zeigt mehrere Funkzellen. Um die Interzellinterferenz zu senken, können benachbarten Basisstationen die Sprungmuster 122_1-122_4 ungleich zugeordnet werden (siehe Fig. 15). In Fig. 15 stellen die unterschiedlichen Kreis- bzw. Ringförmigen Flächen unterschiedliche Sprungmuster 122_1-122_4 dar. Die Sprungmuster 122_1-122_4 können als orthogonal angenommen werden (mit anderen Worten, stören sich kaum/gar nicht). Wie dies in Fig. 15 angedeutet ist, kann bei einer ersten Basisstation 104_1 das erste Sprungmuster 122_1 für die Teilnehmer mit den besten Empfangsbedingungen genutzt werden, während bei einer zweiten Basisstation 104_2 einer benachbarten Funkzelle das erste Sprungmuster 122_1 für die Teilnehmer mit den schlechtesten Kanalbedingungen genutzt wird. Damit kann sichergestellt werden, dass Sprungmuster mit den gleichen Nummern räumlich voneinander getrennt vorliegen. Damit stören sich auch mit den Sprungmustern übertragene Daten gegenseitig nicht, womit die Interzellinterferenz reduziert werden kann.

Es sei darauf hingewiesen, dass die Verwendung von vier Sprungmustern lediglich beispielhaft zu verstehen ist. So können anstelle von vier Sprungmustern auch eine andere Anzahl von Sprungmustern oder aber auch Gruppen von Sprungmustern verwendet werden, wie z.B. vier Gruppen von Sprungmustern. Jede Gruppe von Sprungmustern kann mehrere Sprungmuster aufweisen, die zu einer anderen Gruppe von Sprungmustern orthogonal sind oder eine gute Unterdrückung aufweisen. Ausgehend von z.B. 16 verfügbaren Sprungmustern können beispielsweise vier Gruppen von Sprungmustern jeweils vier Sprungmuster aufweisen.

Natürlich können benachbarten Funkzellen auch komplett andere Sprungmuster zugeteilt werden. So kann beispielsweise eine Basisstation die Sprungmuster 1-4 nutzen, während eine benachbarte Basisstation die Sprungmuster 4-8 nutzen kann.

Eine ungleichmäßige Aufteilung der Anzahl an Sprungmustern pro Gruppe von Sprungmustern ist ebenfalls möglich. Beispielsweise kann eine erste Gruppe von Sprungmustern zwei Sprungmuster aufweisen, während eine zweite Gruppe von Sprungmustern sechs Sprungmuster aufweisen kann.

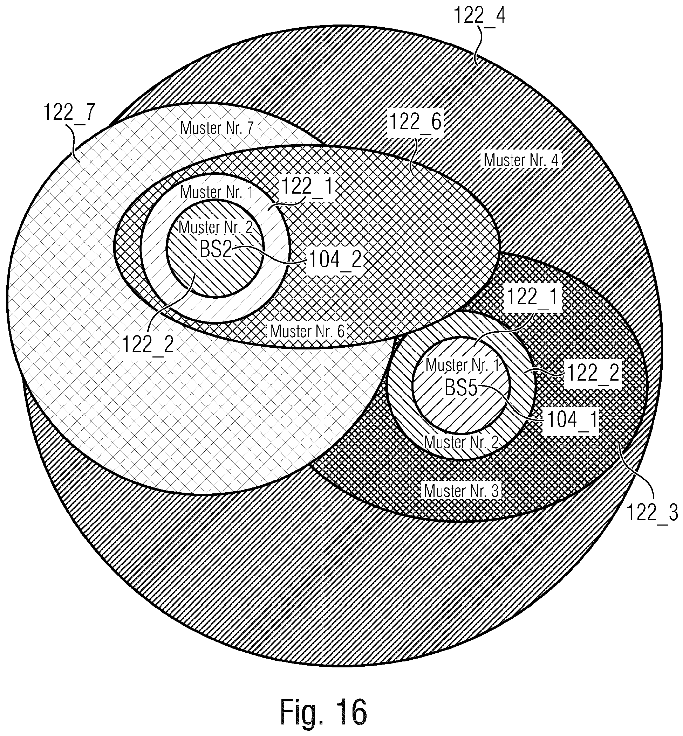

Fig. 16 zeigt eine schematische Ansicht von zwei Basisstationen 104_1 und 104_2 sowie einer Zuordnung von unterschiedlichen Sprungmustern (oder vier Gruppen von unterschiedlichen Sprungmustern) zu jeweils unterschiedlichen geometrischen Bereichen, die von den zwei Basisstationen 104_1 und 104_2 bedient werden, gemäß einem Ausführungsbeispiel.

Wie in Fig. 16 beispielhaft gezeigt ist, kann das von der ersten Basisstation 104_1 bediente geografische Gebiet in vier Bereiche unterteilt werden, wobei, ausgehend von der ersten Basisstation 104_1, ein erstes Sprungmuster 122_1 einem ersten geografischen Bereich zugeordnet sein kann, wobei ein zweites Sprungmuster 122_2 einem zweiten geografischen Bereich zugeordnet werden kann, wobei ein drittes Sprungmuster 122_3 einem dritten geografischen Bereich zugeordnet werden kann, und wobei ein viertes Sprungmuster 122_4 einem vierten geografischen Bereich zugeordnet werden kann.

Das von der zweiten Basistation 104_2 bediente geografische Gebiet kann in fünf Bereiche unterteilt werden, wobei, ausgehend von der zweiten Basisstation 104_2, das zweite Sprungmuster 122_2 einem ersten geografischen Bereich zugeordnet sein kann, wobei ein erstes Sprungmuster 122_1 einem zweiten geografischen Bereich zugeordnet werden kann, wobei ein sechstes Sprungmuster 122_6 einem dritten geografischen Bereich zugeordnet werden kann, wobei ein siebtes Sprungmuster 122_7 einem vierten geografischen Bereich zugeordnet werden kann, und wobei ein viertes Sprungmuster 122_4 einem fünften geografischen Bereich zugeordnet werden kann.

Ein Teilnehmer, der das vierte Sprungmuster 122_4 verwendet, kann somit von beiden Basisstationen 104_1 und 104_2 empfangen werden.

Mit anderen Worten, Fig. 16 zeigt ungleich große Funkzellen. Fig. 16 zeigt hierbei ein Beispiel bei dem die Teilnehmer unter guten Bedingungen praktisch von allen Basisstationen 104_1 und 104_2 empfangen werden können. Wenn alle Basisstationen 104_1 und 104_2 bestimmte Sprungmuster empfangen, dann sollten diese Sprungmuster nur einmal zugeordnet werden und nicht wieder in den benachbarten Funkzellen genutzt werden. Ein Beispiel ist eine Installation von einem Teilnehmer (z.B. Zähler) auf einem Dach eines Hochhauses und gleichzeitig im Keller eines Hochhauses. Hier kann das Sprungmuster, das von dem auf dem Dach angeordneten Teilnehmer verwendet wird, nicht für andere Teilnehmer wiederbenutzt werden.

Bei Ausführungsbeispielen können daher die Sprungmuster adaptiv durch einen zentralen Server (z.B. Head End) an die Basisstationen mitgeteilt werden.

### 5. Weitere Ausführungsbeispiele

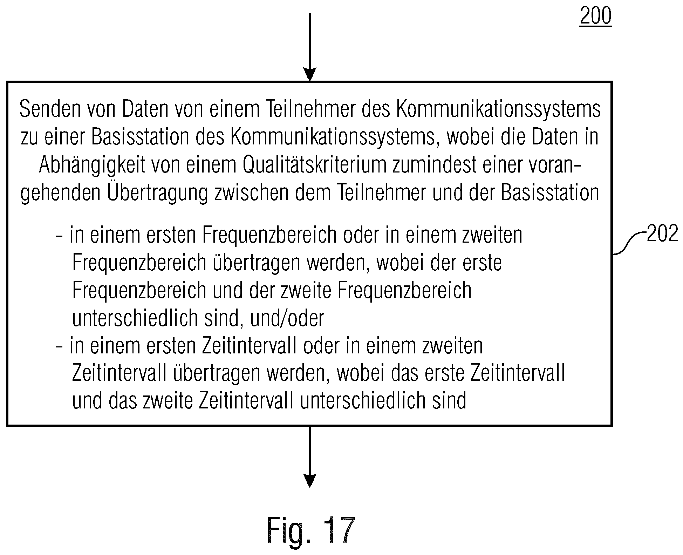

Fig. 17 zeigt ein Flussdiagramm eines Verfahrens 200 zum Senden von Daten in einem drahtlosen Kommunikationssystem, wobei das Kommunikationssystem eine Vielzahl von untereinander unkoordinierten Teilnehmern aufweist. Das Verfahren umfasst einen Schritt des Sendens von Daten von einem Teilnehmer des Kommunikationssystems zu einer Basisstation des Kommunikationssystems, wobei die Daten in Abhängigkeit von einem Qualitätskriterium zumindest einer vorangehenden Übertragung zwischen dem Teilnehmer und der Basisstation
- in einem ersten Frequenzbereich oder in einem zweiten Frequenzbereich übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

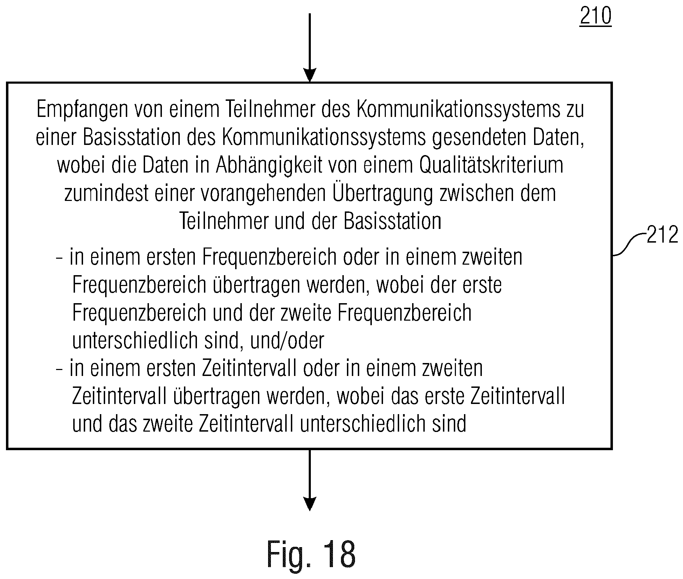

Fig. 18 zeigt ein Flussdiagramm eines Verfahrens 210 zum Empfangen von Daten in einem drahtlosen Kommunikationssystem, wobei das Kommunikationssystem eine Vielzahl von untereinander unkoordinierten Teilnehmern aufweist. Das Verfahren umfasst einen Schritt des Empfangens von einem Teilnehmer des Kommunikationssystems zu einer Basisstation des Kommunikationssystems gesendeten Daten, wobei die Daten in Abhängigkeit von einem Qualitätskriterium zumindest einer vorangehenden Übertragung zwischen dem Teilnehmer und der Basisstation
- in einem ersten Frequenzbereich oder in einem zweiten Frequenzbereich bertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

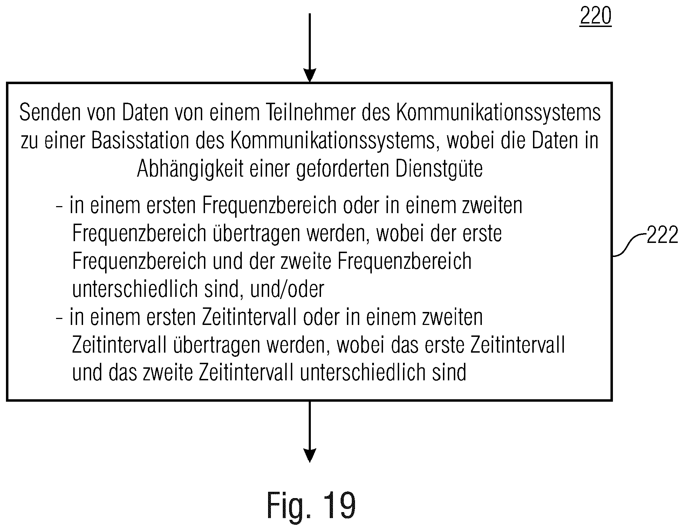

Fig. 19 zeigt ein Flussdiagramm eines Verfahrens 220 zum Senden von Daten in einem drahtlosen Kommunikationssystem, wobei das Kommunikationssystem eine Vielzahl von untereinander unkoordinierten Teilnehmern aufweist. Das Verfahren umfasst einen Schritt des Sendens von Daten von einem Teilnehmer des Kommunikationssystems zu einer Basisstation des Kommunikationssystems, wobei die Daten in Abhängigkeit einer geforderten Dienstgüte
- in einem ersten Frequenzbereich oder in einem zweiten Frequenzbereich übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

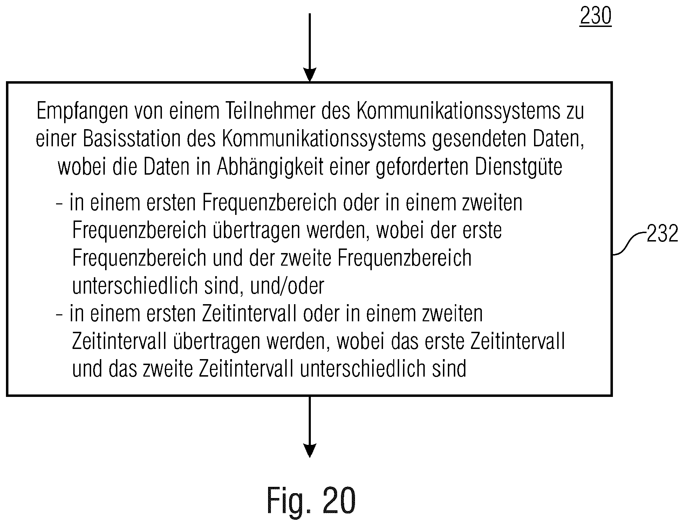

Fig. 20 zeigt ein Flussdiagramm eines Verfahrens 230 zum Empfangen von Daten in einem drahtlosen Kommunikationssystem, wobei das Kommunikationssystem eine Vielzahl von untereinander unkoordinierten Teilnehmern aufweist. Das Verfahren umfasst einen Schritt des Empfangens von von einem Teilnehmer des Kommunikationssystems zu einer Basisstation des Kommunikationssystems gesendeten Daten, wobei die Daten in Abhängigkeit einer geforderten Dienstgüte
- in einem ersten Frequenzbereich oder in einem zweiten Frequenzbereich übertragen werden, wobei der erste Frequenzbereich und der zweite Frequenzbereich unterschiedlich sind, und/oder
- in einem ersten Zeitintervall oder in einem zweiten Zeitintervall übertragen werden, wobei das erste Zeitintervall und das zweite Zeitintervall unterschiedlich sind.

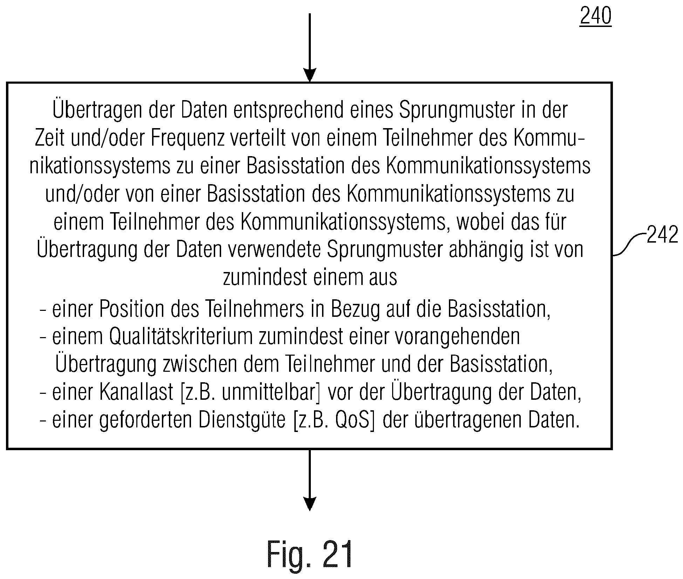

Fig. 21 zeigt ein Flussdiagramm eines Verfahrens 240 zum Übertragen von Daten in einem drahtlosen Kommunikationssystem. Das Verfahren umfasst einen Schritt des Übertragens von Daten entsprechend eines Sprungmuster in der Zeit und/oder Frequenz verteilt von einem Teilnehmer des Kommunikationssystems zu einer Basisstation des Kommunikationssystems und/oder von einer Basisstation des Kommunikationssystems zu einem Teilnehmer des Kommunikationssystems, wobei das für die Übertragung der Daten verwendete Sprungmuster abhängig ist von zumindest einem aus
- einer Position des Teilnehmers in Bezug auf die Basisstation,
- einem Qualitätskriterium zumindest einer vorangehenden Übertragung zwischen dem Teilnehmer und der Basisstation,
- einer Kanallast vor der Übertragung der Daten,
- einer geforderten Dienstgüte der übertragenen Daten.

Ausführungsbeispiele der vorliegenden Erfindung befassen sich mit einem IOT-System (IOT = Internet of Things, dt. Internet der Dinge) mit asymmetrischer Datenübertragung von vielen Teilnehmern (z.B. Sensorknoten) zu einer Basisstation unter Verwendung eines sogenannten Wettbewerbs-Vielfachzugriffsverfahrens [8]. Da hier jeder sendebereite Sensorknoten nach Belieben auf den Uplink-Kanal zugreifen darf, entstehen bereits in der Nutzer-Zelle wegen der fehlenden Nutzer-Orthogonalität potentiell sehr hohe Gleichkanalstörungen. Teilnehmer (z.B. Sensorknoten), die aufgrund ihrer großen Entfernung zur Basisstation oder aufgrund ihrer ungünstigen Positionierung einen hohen Pfadverlust zur Basisstation aufweisen, haben dann ein sehr niedriges CIR. Durch dieses schlechte CIR ist es diesen Sensorknoten häufig nicht möglich in bestimmten vorgegebenen Intervallen Ihre Daten korrekt an die Basisstation zu übertragen. Hierdurch kann häufig ein geforderter QoS (QoS = Quality of Service, dt. Dienstgüte) nicht eingehalten werden. Ausführungsbeispiele der vorliegenden Erfindung nutzten daher eine unterschiedliche (Frequenz-)Bereichszuweisung, wodurch sich die Störleistung I verringern lässt.

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basistation zum Endpunkt, oder vom Endpunkt zur Basisstation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Ausführungsbeispiele der vorliegenden Erfindung können in dem in ETSI TS 103 357 (v1.1.1) definierten Kommunikationssystem eingesetzt werden bzw. dieses erweitern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] 3rd Generation Partnership Project 3GPP TR 45.820, "Cellular system support for ultralow complexity and low throughput Internet of Things (CloT)"
[2] 3rd Generation Partnership Project 3GPP TR 38.913, "Study on Scenarios and Requirements for Next Generation Access Technologies", v14.0.0.
[3] DE 10 2011 082 098 B4
[4] ETSI TS 103 357, "V1.1.1 (2018-06)
[5] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013
[6] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015
[7] C. Lüders, "Mobilfunksysteme. Grundlagen, Funktionsweise, Planungsaspekte", Vogel Buchverlag, Kamprath-Reihe, 2001
[8] M. Bossert, M. Breitenbach, "Digitale Netze", B.G. Teubner Stuttgart - Leipzig, 1999
[9] W. Koch, "Grundlagen der Mobilkommunikation", Vorlesungsskript im WS 2010/2011, Lehrstuhl für Mobilkommunikation, Universität Erlangen-Nürnberg, 2011
[10] 3GPP TSG RAN1#88 Athens, R1-1703865, "On 5G mMTC requirement fulfilment, NBloT and eMTC connection density", source Ericsson, 13.-17. Feb. 2017
[11] A. Aragon-Zavala, "Indoor Wireless Communications: From Theory to Implementation", John Wiley & Sons, 2017

## Patentansprüche

1. Teilnehmer (106_1) eines drahtlosen Kommunikationssystems (102),
wobei das Kommunikationssystem (102) eine Vielzahl von untereinander unkoordinierten Teilnehmern (106_1-106_n) aufweist,
wobei das Kommunikationssystem (102) in einem Frequenzband kommuniziert, das von einer Vielzahl von untereinander unkoordinierten Kommunikationssystemen zur Kommunikation genutzt wird,
wobei der Teilnehmer (106_1) konfiguriert ist, um Daten (120) zu einer Basisstation (104_1) des Kommunikationssystems (102) zu senden,
wobei der Teilnehmer (106_1) konfiguriert ist, um, in Abhängigkeit von einem Qualitätskriterium zumindest einer vorangehenden Übertragung zwischen dem Teilnehmer (106_1) und der Basisstation, die Daten (120)
- in einem ersten Frequenzbereich (126) oder in einem zweiten Frequenzbereich (128) zu übertragen, wobei der erste Frequenzbereich (126) und der zweite Frequenzbereich (128) unterschiedlich sind, und/oder
- in einem ersten Zeitintervall (127) oder in einem zweiten Zeitintervall (129) zu übertragen, wobei das erste Zeitintervall (127) und das zweite Zeitintervall (129) unterschiedlich sind,
wobei der Teilnehmer (106_1) konfiguriert ist, um die Daten (120) in dem ersten Frequenzbereich (126) und/oder in dem ersten Zeitintervall (127) zu übertragen, wenn das Qualitätskriterium in einem ersten Qualitätskriteriums-Bereich liegt oder größer gleich einer Qualitätskriteriums-Schwelle ist,
wobei der Teilnehmer (106_1) konfiguriert ist, um die Daten (120) in dem zweiten Frequenzbereich (128) und/oder in dem zweiten Zeitintervall (129) zu übertragen, wenn das Qualitätskriterium in einem zweiten Qualitätskriteriums-Bereich liegt oder kleiner als die Qualitätskriteriums-Schwelle ist,
wobei das Qualitätskriterium zumindest eines ist aus
- einem Mindest-Empfangspegel,
- einer Bitfehlerrate,
- einer Blockfehlerrate,
- einer Paketfehlerrate
- einem Signal-zu-Rausch Verhältnis,
- einem Signal-zu-Interferenz Verhältnis,
wobei die zumindest eine vorangehende Übertragung zwischen dem Teilnehmer (106_1) und der Basisstation (104_1)
- zumindest eine Übertragung einer Bake oder eine Übertragung von Daten (120) von der Basisstation (104_1) zu dem Teilnehmer (106_1) umfasst, wobei der Teilnehmer (106_1) konfiguriert ist, um das Qualitätskriterium der zumindest einen Übertragung der Bake oder der zumindest einen Übertragung von Daten (120) von der Basisstation (104_1) zu dem Teilnehmer (106_1) zu ermitteln oder zu schätzen,
- oder zumindest eine vorangehende Übertragung von Daten (120) von dem Teilnehmer (106_1) zu der Basisstation (104_1) umfasst, wobei der Teilnehmer (106_1) konfiguriert ist, um eine Übertragung von Daten (120) von der Basisstation (104_1) zu empfangen, wobei die Übertragung von Daten (120) von der Basisstation (104_1) eine Information über das Qualitätskriterium der zumindest einen vorangehenden Übertragung von Daten (120) von dem Teilnehmer (106_1) zu der Basisstation (104_1) aufweist.

2. Teilnehmer (106_1) nach Anspruch 1,
wobei der Teilnehmer (106_1) konfiguriert ist, um die Daten (120) für die Übertragung in dem ersten Frequenzbereich (126) und/oder Zeitintervall mit einer ersten Coderate zu versehen,
wobei der Teilnehmer (106_1) konfiguriert ist, um die Daten (120) für die Übertragung in dem zweiten Frequenzbereich (128) und/oder Zeitintervall mit einer zweiten Coderate zu versehen,
wobei die erste Coderate größer ist als die zweite Coderate.

3. Teilnehmer (106_1) nach einem der Ansprüche 1 bis 2,
wobei der Teilnehmer (106_1) konfiguriert ist, um die Daten (120) in dem ersten Frequenzbereich (126) und/oder ersten Zeitintervall (127) entsprechend eines ersten Sprungmusters (122_1) zu übertragen,
wobei der Teilnehmer (106_1) konfiguriert ist, um die Daten (120) in dem zweiten Frequenzbereich (128) und/oder zweiten Zeitintervall (129) entsprechend eines zweiten Sprungmusters (122_2) zu übertragen,
wobei das erste Sprungmuster (122_1) und das zweite Sprungmuster (122_2) unterschiedlich sind.

4. Teilnehmer (106_1) nach Anspruch 3,
wobei das erste Sprungmuster (122_1) eines aus einer ersten Gruppe von Sprungmustern ist, die dem ersten Frequenzbereich (126) und/oder ersten Zeitintervall (127) zugewiesen ist,
wobei das zweite Sprungmuster (122_2) eines aus einer zweiten Gruppe von Sprungmustern ist, die dem zweiten Frequenzbereich (128) und/oder zweiten Zeitintervall (129) zugewiesen ist,
wobei die erste Gruppe von Sprungmustern und die zweite Gruppe von Sprungmustern unterschiedlich sind.

5. Basisstation (104_1) eines drahtlosen Kommunikationssystems (102),
wobei das Kommunikationssystem (102) eine Vielzahl von untereinander unkoordinierten Teilnehmern (106_1-106_n) aufweist,
wobei das Kommunikationssystem (102) in einem Frequenzband kommuniziert, das von einer Vielzahl von untereinander unkoordinierten Kommunikationssystemen zur Kommunikation genutzt wird,
wobei die Basisstation (104_1) konfiguriert ist, um Daten (120) von einem Teilnehmer (106_1) des Kommunikationssystems (102) zu empfangen,
wobei die Daten (120) in Abhängigkeit von einem Qualitätskriterium zumindest einer vorangehenden Übertragung zwischen dem Teilnehmer (106_1) und der Basisstation
- in einem ersten Frequenzbereich (126) oder in einem zweiten Frequenzbereich (128) übertragen werden, wobei der erste Frequenzbereich (126) und der zweite Frequenzbereich (128) unterschiedlich sind, und/oder
- in einem ersten Zeitintervall (127) oder in einem zweiten Zeitintervall (129) übertragen werden, wobei das erste Zeitintervall (127) und das zweite Zeitintervall (129) unterschiedlich sind;
wobei die Daten (120) in dem ersten Frequenzbereich (126) und/oder in dem ersten Zeitintervall (127) übertragen werden, wenn das Qualitätskriterium in einem ersten Qualitätskriteriums-Bereich liegt oder größer gleich einer Qualitätskriteriums-Schwelle ist,
wobei die Daten (120) in dem zweiten Frequenzbereich (128) und/oder in dem zweiten Zeitintervall (129) übertragen werden, wenn das Qualitätskriterium in einem zweiten Qualitätskriteriums-Bereich liegt oder kleiner als die Qualitätskriteriums-Schwelle ist,
wobei das Qualitätskriterium zumindest eines ist aus
- einem Mindest-Empfangspegel,
- einer Bitfehlerrate,
- einer Blockfehlerrate,
- einer Paketfehlerrate,
- einem Signal-zu-Rausch Verhältnis,
- einem Signal-zu-Interferenz Verhältnis,
wobei die zumindest eine vorangehende Übertragung zumindest eine vorangehende Übertragung von Daten (120) von dem Teilnehmer (106_1) zu der Basisstation (104_1) umfasst,
wobei die Basisstation (104_1) konfiguriert ist, um das Qualitätskriterium basierend auf der zumindest einen vorangehenden Übertragung von Daten (120) von dem Teilnehmer (106_1) zu der Basisstation (104_1) zu ermitteln,
wobei die Basisstation (104_1) konfiguriert ist, um Daten (120) zu dem Teilnehmer (106_1) zu senden, die eine Information über das Qualitätskriterium der zumindest einen vorangehenden Übertragung von Daten (120) von dem Teilnehmer (106_1) zu der Basisstation (104_1) aufweist.

6. Basisstation (104_1) nach Anspruch 5,
wobei die in dem ersten Frequenzbereich (126) und/oder ersten Zeitintervall (127) übertragene Daten (120) mit einer ersten Coderate versehen sind,
wobei die in dem zweiten Frequenzbereich (128) und/oder zweiten Zeitintervall (129) übertragene Daten (120) mit einer zweiten Coderate versehen sind,
wobei die erste Coderate größer ist als die zweite Coderate.

7. Basisstation (104_1) nach einem der Ansprüche 5 bis 6,
wobei die Daten (120) in dem ersten Frequenzbereich (126) und/oder ersten Zeitintervall (127) entsprechend eines ersten Sprungmusters (122_1) übertragen werden,
wobei die Daten (120) in dem zweiten Frequenzbereich (128) und/oder zweiten Zeitintervall (129) entsprechend eines zweiten Sprungmusters (122_2) übertragen werden,
wobei das erste Sprungmuster (122_1) und das zweite Sprungmuster (122_2) unterschiedlich sind.

8. Basisstation (104_1) nach Anspruch 7,
wobei das erste Sprungmuster (122_1) eines aus einer ersten Gruppe von Sprungmustern ist, die dem ersten Frequenzbereich (126) und/oder ersten Zeitintervall (127) zugewiesen ist,
wobei das zweite Sprungmuster (122_2) eines aus einer zweiten Gruppe von Sprungmustern ist, die dem zweiten Frequenzbereich (129) und/oder zweiten Zeitintervall (129) zugewiesen ist,
wobei die erste Gruppe von Sprungmustern und die zweite Gruppe von Sprungmustern unterschiedlich sind.

9. Verfahren zum Senden von Daten (120) in einem drahtlosen Kommunikationssystem, wobei das Kommunikationssystem (102) eine Vielzahl von untereinander unkoordinierten Teilnehmern (106_1-106_n) aufweist, wobei das Kommunikationssystem (102) in einem Frequenzband kommuniziert, das von einer Vielzahl von untereinander unkoordinierten Kommunikationssystemen zur Kommunikation genutzt wird, wobei das Verfahren aufweist:
Senden von Daten (120) von einem Teilnehmer (106_1) des Kommunikationssystems (102) zu einer Basisstation (104_1) des Kommunikationssystems (102),
wobei die Daten (120) in Abhängigkeit von einem Qualitätskriterium zumindest einer vorangehenden Übertragung zwischen dem Teilnehmer (106_1) und der Basisstation
- in einem ersten Frequenzbereich (126) oder in einem zweiten Frequenzbereich (128) übertragen werden, wobei der erste Frequenzbereich (126) und der zweite Frequenzbereich (128) unterschiedlich sind, und/oder
- in einem ersten Zeitintervall (127) oder in einem zweiten Zeitintervall (129) übertragen werden, wobei das erste Zeitintervall (127) und das zweite Zeitintervall (129) unterschiedlich sind,
wobei die Daten (120) in dem ersten Frequenzbereich (126) und/oder in dem ersten Zeitintervall (127) übertragen werden, wenn das Qualitätskriterium in einem ersten Qualitätskriteriums-Bereich liegt oder größer gleich einer Qualitätskriteriums-Schwelle ist,
wobei die Daten (120) in dem zweiten Frequenzbereich (128) und/oder in dem zweiten Zeitintervall (129) übertragen werden, wenn das Qualitätskriterium in einem zweiten Qualitätskriteriums-Bereich liegt oder kleiner als die Qualitätskriteriums-Schwelle ist,
wobei das Qualitätskriterium zumindest eines ist aus
- einem Mindest-Empfangspegel,
- einer Bitfehlerrate,
- einer Blockfehlerrate,
- einer Paketfehlerrate
- einem Signal-zu-Rausch Verhältnis,
- einem Signal-zu-Interferenz Verhältnis,
wobei die zumindest eine vorangehende Übertragung zwischen dem Teilnehmer (106_1) und der Basisstation (104_1)
- zumindest eine Übertragung einer Bake oder eine Übertragung von Daten (120) von der Basisstation (104_1) zu dem Teilnehmer (106_1) umfasst, wobei der Teilnehmer (106_1) konfiguriert ist, um das Qualitätskriterium der zumindest einen Übertragung der Bake oder der zumindest einen Übertragung von Daten (120) von der Basisstation (104_1) zu dem Teilnehmer (106_1) zu ermitteln oder zu schätzen,
- oder zumindest eine vorangehende Übertragung von Daten (120) von dem Teilnehmer (106_1) zu der Basisstation (104_1) umfasst, wobei der Teilnehmer (106_1) konfiguriert ist, um eine Übertragung von Daten (120) von der Basisstation (104_1) zu empfangen, wobei die Übertragung von Daten (120) von der Basisstation (104_1) eine Information über das Qualitätskriterium der zumindest einen vorangehenden Übertragung von Daten (120) von dem Teilnehmer (106_1) zu der Basisstation (104_1) aufweist.

10. Verfahren zum Empfangen von Daten (120) in einem drahtlosen Kommunikationssystem, wobei das Kommunikationssystem (102) eine Vielzahl von untereinander unkoordinierten Teilnehmern (106_1-106_n) aufweist, wobei das Kommunikationssystem (102) in einem Frequenzband kommuniziert, das von einer Vielzahl von untereinander unkoordinierten Kommunikationssystemen zur Kommunikation genutzt wird, wobei das Verfahren aufweist:
Empfangen von einem Teilnehmer (106_1) des Kommunikationssystems (102) zu einer Basisstation (104_1) des Kommunikationssystems (102) gesendeten Daten,
wobei die Daten (120) in Abhängigkeit von einem Qualitätskriterium zumindest einer vorangehenden Übertragung zwischen dem Teilnehmer (106_1) und der Basisstation
- in einem ersten Frequenzbereich (126) oder in einem zweiten Frequenzbereich (128) übertragen werden, wobei der erste Frequenzbereich (126) und der zweite Frequenzbereich (128) unterschiedlich sind, und/oder
- in einem ersten Zeitintervall (127) oder in einem zweiten Zeitintervall (129) übertragen werden, wobei das erste Zeitintervall (127) und das zweite Zeitintervall (129) unterschiedlich sind,
wobei die Daten (120) in dem ersten Frequenzbereich (126) und/oder in dem ersten Zeitintervall (127) übertragen werden, wenn das Qualitätskriterium in einem ersten Qualitätskriteriums-Bereich liegt oder größer gleich einer Qualitätskriteriums-Schwelle ist,
wobei die Daten (120) in dem zweiten Frequenzbereich (128) und/oder in dem zweiten Zeitintervall (129) übertragen werden, wenn das Qualitätskriterium in einem zweiten Qualitätskriteriums-Bereich liegt oder kleiner als die Qualitätskriteriums-Schwelle ist,
wobei das Qualitätskriterium zumindest eines ist aus
- einem Mindest-Empfangspegel,
- einer Bitfehlerrate,
- einer Blockfehlerrate,
- einer Paketfehlerrate,
- einem Signal-zu-Rausch Verhältnis,
- einem Signal-zu-Interferenz Verhältnis,
wobei die zumindest eine vorangehende Übertragung zumindest eine vorangehende Übertragung von Daten (120) von dem Teilnehmer (106_1) zu der Basisstation (104_1) umfasst,
wobei die Basisstation (104_1) konfiguriert ist, um das Qualitätskriterium basierend auf der zumindest einen vorangehenden Übertragung von Daten (120) von dem Teilnehmer (106_1) zu der Basisstation (104_1) zu ermitteln,
wobei die Basisstation (104_1) konfiguriert ist, um Daten (120) zu dem Teilnehmer (106_1) zu senden, die eine Information über das Qualitätskriterium der zumindest einen vorangehenden Übertragung von Daten (120) von dem Teilnehmer (106_1) zu der Basisstation (104_1) aufweist.

11. Computerprogramm zur Durchführung des Verfahrens nach einem der Ansprüche 9 bis 10, wenn das Verfahren auf einem Computer, Mikroprozessor oder SDR-Empfänger abläuft.

## Claims

1. A participant (106_1) of a wireless communication system (102),
wherein the communication system (102) comprises a plurality of mutually uncoordinated participants (106_1-106_n),
wherein the communication system (102) communicates in a frequency band used by a plurality of mutually uncoordinated communication systems for communication,
wherein the participant (106_1) is configured to send data (120) to a base station (104_1) of the communication system (102),
wherein the participant (106_1) is configured to, depending on a quality criterion of at least one preceding transmission between the participant (106_1) and the base station:
- transmit the data (120) in a first frequency range (126) or in a second frequency range (128), wherein the first frequency range (126) and the second frequency range (128) are different, and/or
- transmit the data (120) in a first time interval (127) or in a second time interval (129), wherein the first time interval (127) and the second time interval (129) are different,
wherein the participant (106_1) is configured to transmit the data (120) in the first frequency range (126) and/or in the first time interval (127) if the quality criterion is in a first quality criterion range or is greater than or equal to a quality criterion threshold,
wherein the participant (106_1) is configured to transmit the data (120) in the second frequency range (128) and/or in the second time interval (129) if the quality criterion is in a second quality criterion range or is less than the quality criterion threshold,
wherein the quality criterion is at least one among:
- a minimum receive level,
- a bit error rate,
- a block error rate,
- a packet error rate,
- a signal-to-noise ratio,
- a signal-to-interference ratio,
wherein the at least one preceding transmission between the participant (106_1) and the base station (104_1)
- includes at least one transmission of a beacon or a transmission of data (120) from the base station (104_1) to the participant (106_1), wherein the participant (106_1) is configured to determine or estimate the quality criterion of the at least one transmission of the beacon or the at least one transmission of data (120) from the base station (104_1) to the participant (106_1),
- or includes at least one preceding transmission of data (120) from the participant (106_1) to the base station (104_1), wherein the participant (106_1) is configured to receive a transmission of data (120) from the base station (104_1), the transmission of data (120) from the base station (104_1) comprising information about the quality criterion of the at least one preceding transmission of data (120) from the participant (106_1) to the base station (104_1).

2. The participant (106_1) according to claim 1,
wherein the participant (106_1) is configured to provide the data (120) for the transmission in the first frequency range (126) and/or time interval with a first code rate,
wherein the participant (106_1) is configured to provide the data (120) for the transmission in the second frequency range (128) and/or time interval with a second code rate,
wherein the first code rate is greater than the second code rate.

3. The participant (106_1) according to any one of claims 1 to 2,
wherein the participant (106_1) is configured to transmit the data (120) in the first frequency range (126) and/or first time interval (127) in correspondence with a first hopping pattern (122_1),
wherein the participant (106_1) is configured to transmit the data (120) in the second frequency range (128) and/or second time interval (129) in correspondence with a second hopping pattern (122_2),
wherein the first hopping pattern (122_1) and the second hopping pattern (122_2) are different.

4. The participant (106_1) according to claim 3,
wherein the first hopping pattern (122_1) is one of a first group of hopping patterns associated to the first frequency range (126) and/or first time interval (127),
wherein the second hopping pattern (122_2) is one of a second group of hopping patterns associated to the second frequency range (128) and/or second time interval (129),
wherein the first group of hopping patterns and the second group of hopping patterns are different.

5. A base station (104_1) of a wireless communication system (102),
wherein the communication system (102) comprises a plurality of mutually uncoordinated participants (106_1-106_n),
wherein the communication system (102) communicates in a frequency band used by a plurality of mutually uncoordinated communication systems for communication,
wherein the base station (104_1) is configured to receive data (120) from a participant (106_1) of the communication system (102),
wherein the data (120), in dependence on a quality criterion of at least one preceding transmission between the participant (106_1) and the base station,
- are transmitted in a first frequency range (126) or in a second frequency range (128), wherein the first frequency range (126) and the second frequency range (128) are different, and/or
- are transmitted in a first time interval (127) or in a second time interval (129), wherein the first time interval (127) and the second time interval (129) are different;
wherein the data (120) are transmitted in the first frequency range (126) and/or in the first time interval (127) if the quality criterion is in a first quality criterion range or is greater than or equal to a quality criterion threshold,
wherein the data (120) are transmitted in the second frequency range (128) and/or in the second time interval (129) if the quality criterion is in a second quality criterion range or is less than the quality criterion threshold,
wherein the quality criterion is at least one among:
- a minimum receive level,
- a bit error rate,
- a block error rate,
- a packet error rate,
- a signal-to-noise ratio,
- a signal-to-interference ratio,
wherein the at least one preceding transmission includes at least one preceding transmission of data (120) from the participant (106_1) to the base station (104_1),
wherein the base station (104_1) is configured to determine the quality criterion based on the at least one preceding transmission of data (120) from the participant (106_1) to the base station (104_1),
wherein the base station (104_1) is configured to send data (120) to the participant (106_1), comprising information about the quality criterion of the at least one preceding transmission of data (120) from the participant (106_1) to the base station (104_1).

6. The base station (104_1) according to claim 5,
wherein the data (120) transmitted in the first frequency range (126) and/or first time interval (127) are provided with a first code rate,
wherein the data (120) transmitted in the second frequency range (128) and/or second time interval (129) are provided with a second code rate,
wherein the first code rate is greater than the second code rate.

7. The base station (104_1) according to any one of claims 5 to 6,
wherein the data (120) in the first frequency range (126) and/or first time interval (127) are transmitted in correspondence with a first hopping pattern (122_1),
wherein the data (120) in the second frequency range (128) and/or second time interval (129) are transmitted in correspondence with a second hopping pattern (122_2),
wherein the first hopping pattern (122_1) and the second hopping pattern (122_2) are different.

8. The base station (104_1) according to claim 7,
wherein the first hopping pattern (122_1) is one of a first group of hopping patterns associated to the first frequency range (126) and/or first time interval (127),
wherein the second hopping pattern (122_2) is one of a second group of hopping patterns associated to the second frequency range (129) and/or second time interval (129),
wherein the first group of hopping patterns and the second group of hopping patterns are different.

9. A method for sending data (120) in a wireless communication system, wherein the communication system (102) comprises a plurality of mutually uncoordinated participants (106_1-106_n), wherein the communication system (102) communicates in a frequency band used by a plurality of mutually uncoordinated communication systems for communication, the method comprising:
sending data (120) from a participant (106_1) of the communication system (102) to a base station (104_1) of the communication system (102),
wherein the data (120), in dependence on a quality criterion of at least one preceding transmission between the participant (106_1) and the base station,
- are transmitted in a first frequency range (126) or in a second frequency range (128), wherein the first frequency range (126) and the second frequency range (128) are different, and/or
- are transmitted in a first time interval (127) or in a second time interval (129), wherein the first time interval (127) and the second time interval (129) are different,
wherein the data (120) are transmitted in the first frequency range (126) and/or in the first time interval (127) if the quality criterion is in a first quality criterion range or is greater than or equal to a quality criterion threshold,
wherein the data (120) are transmitted in the second frequency range (128) and/or in the second time interval (129) if the quality criterion is in a second quality criterion range or is less than the quality criterion threshold,
wherein the quality criterion is at least one among:
- a minimum receive level,
- a bit error rate,
- a block error rate,
- a packet error rate,
- a signal-to-noise ratio,
- a signal-to-interference ratio,
wherein the at least one preceding transmission between the participant (106_1) and the base station (104_1) includes
- at least one transmission of a beacon or a transmission of data (120) from the base station (104_1) to the participant (106_1), wherein the participant (106_1) is configured to determine or estimate the quality criterion of the at least one transmission of the beacon or the at least one transmission of data (120) from the base station (104_1) to the participant (106_1),
- or at least one preceding transmission of data (120) from the participant (106_1) to the base station (104_1), wherein the participant (106_1) is configured to receive a transmission of data (120) from the base station (104_1), the transmission of data (120) from the base station (104_1) comprising information about the quality criterion of the at least one preceding transmission of data (120) from the participant (106_1) to the base station (104_1).

10. A method for receiving data (120) in a wireless communication system, wherein the communication system (102) comprises a plurality of mutually uncoordinated participants (106_1-106_n), wherein the communication system (102) communicates in a frequency band used by a plurality of mutually uncoordinated communication systems for communication, the method comprising:
receiving data sent from a participant (106_1) of the communication system (102) to a base station (104_1) of the communication system (102),
wherein the data (120), in dependence on a quality criterion of at least one preceding transmission between the participant (106_1) and the base station
- are transmitted in a first frequency range (126) or in a second frequency range (128), wherein the first frequency range (126) and the second frequency range (128) are different, and/or
- are transmitted in a first time interval (127) or in a second time interval (129), wherein the first time interval (127) and the second time interval (129) are different,
wherein the data (120) are transmitted in the first frequency range (126) and/or in the first time interval (127) if the quality criterion is in a first quality criterion range or is greater than or equal to a quality criterion threshold,
wherein the data (120) are transmitted in the second frequency range (128) and/or in the second time interval (129) if the quality criterion is in a second quality criterion range or is less than the quality criterion threshold,
wherein the quality criterion is at least one among:
- a minimum receive level,
- a bit error rate,
- a block error rate,
- a packet error rate,
- a signal-to-noise ratio,
- a signal-to-interference ratio,
wherein the at least one preceding transmission includes at least one preceding transmission of data (120) from the participant (106_1) to the base station (104_1),
wherein the base station (104_1) is configured to determine the quality criterion based on the at least one preceding transmission of data (120) from the participant (106_1) to the base station (104_1),
wherein the base station (104_1) is configured to send data (120) to the participant (106_1), comprising information about the quality criterion of the at least one preceding transmission of data (120) from the participant (106_1) to the base station (104_1).

11. A computer program for performing the method according to any one of claims 9 to 10, when the method runs on a computer, microprocessor, or SDR receiver.

## Revendications

1. Abonné (106_1) d'un système de communication sans fil (102),
le système de communication (102) comprenant une pluralité d'abonnés (106_1-106_n) non coordonnés entre eux,
le système de communication (102) communiquant dans une bande de fréquences utilisée pour la communication par une pluralité de systèmes de communication non coordonnés entre eux,
l'abonné (106_1) étant configuré pour envoyer des données (120) à une station de base (104_1) du système de communication (102),
l'abonné (106_1) étant configuré pour, en fonction d'un critère de qualité d'au moins une transmission précédente entre l'abonné (106_1) et la station de base,
- à transmettre les données (120) dans une première plage de fréquences (126) ou dans une deuxième plage de fréquences (128), la première plage de fréquences (126) et la deuxième plage de fréquences (128) étant différentes, et/ou
- à transmettre les données (120) dans un premier intervalle de temps (127) ou dans un deuxième intervalle de temps (129), le premier intervalle de temps (127) et le deuxième intervalle de temps (129) étant différents,
l'abonné (106_1) étant configuré pour transmettre les données (120) dans la première plage de fréquences (126) et/ou dans le premier intervalle de temps (127) lorsque le critère de qualité se situe dans une première plage du critère de qualité ou est supérieur ou égal à un seuil du critère de qualité,
l'abonné (106_1) étant configuré pour transmettre les données (120) dans la deuxième plage de fréquences (128) et/ou dans le deuxième intervalle de temps (129) lorsque le critère de qualité se situe dans une deuxième plage du critère de qualité ou est inférieur au seuil du critère de qualité,
le critère de qualité étant au moins l'un des suivants :
- un niveau de réception minimal,
- un taux d'erreur binaire,
- un taux d'erreur de bloc,
- un taux d'erreur de paquets
- un rapport signal/bruit,
- un rapport signal/interférence,
ladite au moins une transmission précédente entre l'abonné (106_1) et la station de base (104_1)
- incluant au moins une transmission d'une balise ou une transmission de données (120) de la station de base (104_1) vers l'abonné (106_1), l'abonné (106_1) étant configuré pour déterminer ou estimer le critère de qualité de ladite au moins une transmission de la balise ou de ladite au moins une transmission de données (120) de la station de base (104_1) vers l'abonné (106_1),
- ou incluant au moins une transmission précédente de données (120) de l'abonné (106_1) vers la station de base (104_1), l'abonné (106_1) étant configuré pour recevoir une transmission de données (120) en provenance de la station de base (104_1), ladite transmission de données (120) en provenance de la station de base (104_1) comprenant une information relative au critère de qualité de ladite au moins une transmission précédente de données (120) de l'abonné (106_1) vers la station de base (104_1).

2. Abonné (106_1) selon la revendication 1,
l'abonné (106_1) étant configuré pour pourvoir les données (120) destinées à être transmises dans la première plage de fréquences (126) et/ou dans le premier intervalle de temps d'un premier taux de codage,
l'abonné (106_1) étant configuré pour pourvoir les données (120) destinées à être transmises dans la deuxième plage de fréquences (128) et/ou dans le deuxième intervalle de temps d'un deuxième taux de codage.
le premier taux de codage étant supérieur au deuxième taux de codage.

3. Abonné (106_1) selon l'une des revendications 1 à 2,
l'abonné (106_1) étant configuré pour transmettre les données (120) dans la première plage de fréquences (126) et/ou le premier intervalle de temps (127) conformément à un premier motif de saut (122_1),
l'abonné (106_1) étant configuré pour transmettre les données (120) dans la deuxième plage de fréquences (128) et/ou le deuxième intervalle de temps (129) conformément à un deuxième motif de saut (122_2),
le premier motif de saut (122_1) et le deuxième motif de saut (122_2) étant différents.

4. Abonné (106_1) selon la revendication 3,
le premier motif de saut (122_1) faisant partie d'un premier groupe de motifs de saut attribué à la première plage de fréquences (126) et/ou au premier intervalle de temps (127),
le deuxième motif de saut (122_2) faisant partie d'un deuxième groupe de motifs de saut attribué à la deuxième plage de fréquences (128) et/ou au deuxième intervalle de temps (129),
le premier groupe de motifs de saut et le deuxième groupe de motifs de saut étant différents.

5. Station de base (104_1) d'un système de communication sans fil (102),
le système de communication (102) comprenant une pluralité d'abonnés (106_1-106_n) non coordonnés entre eux,
le système de communication (102) communiquant dans une bande de fréquences utilisée pour la communication par une pluralité de systèmes de communication non coordonnés entre eux,
la station de base (104_1) étant configurée pour recevoir des données (120) provenant d'un abonné (106_1) du système de communication (102),
les données (120), en fonction d'un critère de qualité d'au moins une transmission précédente entre l'abonné (106_1) et la station de base,
- étant transmises dans une première plage de fréquences (126) ou dans une deuxième plage de fréquences (128), la première plage de fréquences (126) et la deuxième plage de fréquences (128) étant différentes, et/ou
- étant transmises dans un premier intervalle de temps (127) ou dans un deuxième intervalle de temps (129), le premier intervalle de temps (127) et le deuxième intervalle de temps (129) étant différents ;
les données (120) étant transmises dans la première plage de fréquences (126) et/ou dans le premier intervalle de temps (127) lorsque le critère de qualité se situe dans une première plage du critère de qualité ou est supérieur ou égal à un seuil du critère de qualité,
les données (120) étant transmises dans la deuxième plage de fréquences (128) et/ou dans le deuxième intervalle de temps (129) lorsque le critère de qualité se situe dans une deuxième plage du critère de qualité ou est inférieur au seuil du critère de qualité,
le critère de qualité étant au moins l'un des suivants :
- un niveau de réception minimal,
- un taux d'erreur binaire,
- un taux d'erreur de bloc,
- un taux d'erreur de paquets,
- un rapport signal/bruit,
- un rapport signal/interférence,
ladite au moins une transmission précédente incluant au moins une transmission précédente de données (120) de l'abonné (106_1) vers la station de base (104_1),
la station de base (104_1) étant configurée pour déterminer le critère de qualité sur la base d'au moins une transmission précédente de données (120) de l'abonné (106_1) vers la station de base (104_1),
la station de base (104_1) étant configurée pour envoyer à l'abonné (106_1) des données (120) comprenant une information relative au critère de qualité d'au moins une transmission précédente de données (120) de l'abonné (106_1) vers la station de base (104_1).

6. Station de base (104_1) selon la revendication 5,
les données (120) transmises dans la première plage de fréquences (126) et/ou le premier intervalle de temps (127) étant pourvues d'un premier taux de codage,
les données (120) transmises dans la deuxième plage de fréquences (128) et/ou le deuxième intervalle de temps (129) étant pourvues d'un deuxième taux de codage,
le premier taux de codage étant supérieur au deuxième taux de codage.

7. Station de base (104_1) selon l'une des revendications 5 à 6,
les données (120) dans la première plage de fréquences (126) et/ou le premier intervalle de temps (127) étant transmises conformément à un premier motif de saut (122_1),
les données (120) étant transmises dans la deuxième plage de fréquences (128) et/ou le deuxième intervalle de temps (129) conformément à un deuxième motif de saut (122_2),
le premier motif de saut (122_1) et le deuxième motif de saut (122_2) étant différents.

8. Station de base (104_1) selon la revendication 7,
le premier motif de saut (122_1) faisant partie d'un premier groupe de motifs de saut attribué à la première plage de fréquences (126) et/ou au premier intervalle de temps (127),
le deuxième motif de saut (122_2) faisant partie d'un deuxième groupe de motifs de saut attribué à la deuxième plage de fréquences (129) et/ou au deuxième intervalle de temps (129),
le premier groupe de motifs de saut et le deuxième groupe de motifs de saut étant différents.

9. Procédé de transmission de données (120) dans un système de communication sans fil, le système de communication (102) comprenant une pluralité d'abonnés (106_1-106_n) non coordonnés entre eux, le système de communication (102) communiquant dans une bande de fréquences utilisée pour la communication par une pluralité de systèmes de communication non coordonnés entre eux, le procédé comprenant :
l'envoi de données (120) d'un abonné (106_1) du système de communication (102) à une station de base (104_1) du système de communication (102),
les données (120), en fonction d'un critère de qualité d'au moins une transmission précédente entre l'abonné (106_1) et la station de base,
- étant transmises dans une première plage de fréquences (126) ou dans une deuxième plage de fréquences (128), la première plage de fréquences (126) et la deuxième plage de fréquences (128) étant différentes, et/ou
- étant transmises dans un premier intervalle de temps (127) ou dans un deuxième intervalle de temps (129), le premier intervalle de temps (127) et le deuxième intervalle de temps (129) étant différents,
les données (120) étant transmises dans la première plage de fréquences (126) et/ou dans le premier intervalle de temps (127) lorsque le critère de qualité se situe dans une première plage du critère de qualité ou est supérieur ou égal à un seuil du critère de qualité,
les données (120) étant transmises dans la deuxième plage de fréquences (128) et/ou dans le deuxième intervalle de temps (129) lorsque le critère de qualité se situe dans une deuxième plage du critère de qualité ou est inférieur au seuil du critère de qualité,
le critère de qualité étant au moins l'un des suivants :
- un niveau de réception minimal,
- un taux d'erreur binaire,
- un taux d'erreur de bloc,
- un taux d'erreur de paquets
- un rapport signal/bruit,
- un rapport signal/interférence,
ladite au moins une transmission précédente entre l'abonné (106_1) et la station de base (104_1)
- incluant au moins une transmission d'une balise ou une transmission de données (120) depuis la station de base (104_1) vers l'abonné (106_1), l'abonné (106_1) étant configuré pour déterminer ou estimer le critère de qualité de ladite au moins une transmission de la balise ou de ladite au moins une transmission de données (120) de la station de base (104_1) vers l'abonné (106_1),
- ou incluant au moins une transmission précédente de données (120) de l'abonné (106_1) vers la station de base (104_1), l'abonné (106_1) étant configuré pour recevoir une transmission de données (120) en provenance de la station de base (104_1), ladite transmission de données (120) en provenance de la station de base (104_1) comprenant une information relative au critère de qualité de ladite au moins une transmission précédente de données (120) de l'abonné (106_1) vers la station de base (104_1).

10. Procédé de réception de données (120) dans un système de communication sans fil, le système de communication (102) comprenant une pluralité d'abonnés (106_1-106_n) non coordonnés entre eux, le système de communication (102) communiquant dans une bande de fréquences utilisée pour la communication par une pluralité de systèmes de communication non coordonnés entre eux, le procédé comprenant :
la réception de données envoyées par un abonné (106_1) du système de communication (102) à une station de base (104_1) du système de communication (102),
les données (120), en fonction d'un critère de qualité d'au moins une transmission précédente entre l'abonné (106_1) et la station de base,
- étant transmises dans une première plage de fréquences (126) ou dans une deuxième plage de fréquences (128), la première plage de fréquences (126) et la deuxième plage de fréquences (128) étant différentes, et/ou
- étant transmises dans un premier intervalle de temps (127) ou dans un deuxième intervalle de temps (129), le premier intervalle de temps (127) et le deuxième intervalle de temps (129) étant différents,
les données (120) étant transmises dans la première plage de fréquences (126) et/ou dans le premier intervalle de temps (127) lorsque le critère de qualité se situe dans une première plage du critère de qualité ou est supérieur ou égal à un seuil du critère de qualité,
les données (120) étant transmises dans la deuxième plage de fréquences (128) et/ou dans le deuxième intervalle de temps (129) lorsque le critère de qualité se situe dans une deuxième plage du critère de qualité ou est inférieur au seuil du critère de qualité,
le critère de qualité étant au moins l'un des suivants :
- un niveau de réception minimal,
- un taux d'erreur binaire,
- un taux d'erreur de bloc,
- un taux d'erreur de paquets,
- un rapport signal/bruit,
- un rapport signal/interférence,
ladite au moins une transmission précédente incluant au moins une transmission précédente de données (120) de l'abonné (106_1) vers la station de base (104_1),
la station de base (104_1) étant configurée pour déterminer le critère de qualité sur la base d'au moins une transmission précédente de données (120) de l'abonné (106_1) vers la station de base (104_1),
la station de base (104_1) étant configurée pour envoyer à l'abonné (106_1) des données (120) comprenant une information relative au critère de qualité d'au moins une transmission précédente de données (120) de l'abonné (106_1) vers la station de base (104_1).

11. Programme d'ordinateur pour la mise en œuvre du procédé selon l'une des revendications 9 à 10, lorsque le procédé est exécuté sur un ordinateur, un microprocesseur ou un récepteur SDR.
